(19) Europäisches Patentamt
European Patent Office
Office européen des brevets

(11) **EP 3 734 794 B1**

(12) **EUROPEAN PATENT SPECIFICATION**

(45) Date of publication and mention
of the grant of the patent:
**25.06.2025 Bulletin 2025/26**

(21) Application number: **18895508.2**

(22) Date of filing: **05.12.2018**

(51) International Patent Classification (IPC):
*H02J 7/00* (2006.01)    *H02J 1/10* (2006.01)

(52) Cooperative Patent Classification (CPC):
**H02J 1/10; H02J 7/0024**

(86) International application number:
**PCT/CN2018/000407**

(87) International publication number:
**WO 2019/127617 (04.07.2019 Gazette 2019/27)**

(54) **FULL DIRECT-CURRENT BOOST/BUCK POWER TRANSMISSION SYSTEM**

GLEICHSTROM-AUF-/ABWÄRTSENERGIEÜBERTRAGUNGSSYSTEM

SYSTÈME DE TRANSMISSION D'ÉNERGIE SURVOLTEUR/DÉVOLTEUR EN COURANT CONTINU COMPLET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2017   CN 201711471724**

(43) Date of publication of application:
**04.11.2020   Bulletin 2020/45**

(73) Proprietors:
• **Feng, Lianghuan**
**Chengdu, Sichuan 610064 (CN)**
• **Feng, Lang**
**Chengdu, Sichuan 610064 (CN)**

(72) Inventors:
• **Feng, Lianghuan**
**Chengdu, Sichuan 610064 (CN)**
• **Feng, Lang**
**Chengdu, Sichuan 610064 (CN)**

(74) Representative: **Vitina, Maruta et al**
**Agency TRIA ROBIT**
**P.O. Box 22**
**1010 Riga (LV)**

(56) References cited:
EP-A1- 0 013 005     CN-A- 102 570 777
CN-Y- 201 160 230     US-A1- 2013 015 805

## Description

## TECHNICAL FIELD

The present application relates to power transmission, and more particularly to a full DC buck-boost power transmission system.

## BACKGROUND

The power technology is developed starting from direct current (DC). In 1882, Edison Electric Light Company established the first DC power station in London. In the same year, Nikola Tesla invented the world's first alternating current (AC) generator. From 1884 to 1885, Hungarians K. Zipernowsky, O. Blathy and M. Deri proposed the core-type transformer technology and shell-type transformer technology. In April 1893, American A.E. Kennelly proposed that if the alternating current is a sine wave, the concept of "impedance" can be introduced to calculate the AC circuit based on the Ohm's law. Compared to DC whose voltage is difficult to be boosted and bucked, the voltage of AC can be easily changed using transformers, so that AC power transmission and AC power grid have developed rapidly, thereby forming a pattern of generating AC-transmitting AC-distributing AC.

With the extension of transmission distance and the increase of transmission power and the transmission voltage, various defects of AC power transmission technology in practical applications have been revealed. After weighing the economic benefits and operating characteristics of AC power transmission and DC power transmission, the DC transmission technology was reused.

In the 1950s, a DC power transmission technology based on AC power generation and AC power distribution is invented. In the DC power transmission technology, the AC power at a transmission terminal is firstly rectified into DC power, which is sent to a receiving terminal via DC transmission wires; the DC power is inverted to AC power, and sent to a receiving terminal of the AC power grid. Since the boost and buck of the voltage can only be completed by AC transformers, the DC power transmission technology based on the above-mentioned structure is adopted. In 1914, the concept of a grid-controlled mercury arc valve capable of rectification and inverter was born, and the grid-controlled mercury arc valves were successfully developed more than ten years later. In 1954, the grid-controlled mercury arc valves were applied to DC power transmission, resulting in the establishment of a landmark DC power transmission system connecting the Swedish mainland and Gotland with submarine cables.

The development of the DC power transmission technology is marked by rectification and inversion. After 1977, silicon controlled rectifiers (SCRs) replaced the grid-controlled mercury arc valves, which occupied the dominant position of DC power transmission for more than 20 years, resulting in substantial increases in transmission distance, transmission power and transmission voltage, thereby greatly increasing the number of DC power transmission systems. In the 1990s, flexible DC transmission technology was born, which is a new type of power transmission technology based on Voltage Source Converter (VSC), self-shutdown device and pulse width modulation (PWM) technology. Later, IEEE officially named the flexible DC transmission technology as Voltage Source Converter based High Voltage Direct Current (VSC-HVDC).

The VSC-HVDC power transmission technology has made great progress so far, which shows many advantages over the DC power transmission technology based on silicon controlled rectifiers and the AC power transmission technology. For example, the power transmission is more stable; the allowable working voltage of the cable insulation for DC is two times higher than that for AC; besides, the DC power transmission control system has advantages of fast response, accurate adjustment, easy operation and multi-objective control. Under the condition that the wire cross-sectional areas are the same and the available powers delivered are equal, a power loss of DC power transmission wires is about 2/3 of that of AC power transmission wires, and a transmission efficiency of the DC power transmission wires is twice or more than that of the AC power transmission wires. However, due to the large investment of the DC transmission converter station, the construction cost of the DC power transmission wires is extremely expensive. Therefore, it is crucial to promote the development of the VSC-HVDC transmission technology.

With the development of high power electronic components and control technologies thereof, the power electronic transformer (PET)-DC transformer, which realizes voltage conversion and energy transfer through power electronic conversion technology, has received more and more attention. This kind of DC transformer was proposed at the end of the last century, and its working principle is to achieve a voltage conversion from one DC voltage to another DC voltage or more DC voltages through high-frequency chopping, transformation, isolation, and high-frequency rectification. The PET-DC transformer has advantages of almost 100% equivalent duty ratio, simple structure, lower energy consumption than that of a power frequency transformer, and high power density through increasing switching frequency.

However, since the so-called "DC transformer" still needs to be realized by the AC transformers during the transformation, a DC-to-AC chopping link and an AC-to-DC rectifying link are still needed in the DC transformer. Therefore, the so-called "DC transformer" and the existing DC transformers have the same essence.

The proportion of renewable energy generation, especially photovoltaic power generation, is rising, so that the situation of transmission technology and engineering will undergo major changes. With photovoltaic power generation accounting for 2%, 5%, 10%, and more than 50% of the total power generation, an era of "generating DC-transmitting DC-distributing DC" is coming. Therefore, the full DC transformer power transmission technology will be a preferred choice to become a basic framework of the global energy Internet in the future.

An application EP0013005A1 discloses a battery module having utility not only for off-peak power storage but also as a component of D.C. (step-down or step-up) transformers. The D.C. transformer can function as the principal component of a D.C. line terminal and enables that terminal to be disconnected from the line without disrupting the rest of the system. The invention also utilizes a plurality of rechargeable batteries for both power storage and voltage scaling, in a D.C. distribution system.

## SUMMARY

In order to solve the technical problems in DC to AC and AC to DC conversions during power transmission, the present disclosure provides a full DC boost-buck power transmission system.

The present disclosure provides a full DC boost-buck power transmission system, comprising:

at least one boost station;
at least one buck station;
a power grid management center;
a DC power supply; and
a cable provided for connecting the at least one boost station to the at least one buck station;
characterized in that the at least one boost station comprises a plurality of first battery packs, and the first battery packs are connected in parallel for storage of DC power from the DC power supply;
when the storage of the first battery packs is completed, the first battery packs are disconnected from the DC power supply and are connected in series to perform the boost operation, and then connected to the cable to supply the DC power to the at least one buck station; and after transmission of the DC power is completed, the first battery packs are disconnected from the cable and connected in parallel, and then connected to the DC power supply for the storage of the DC power;
the at least one buck station comprises a plurality of second battery packs, and the second battery packs are connected in series for transmission of DC power from the boost station to the buck station;
when the transmission of the DC power is completed, the second battery packs of the at least one buck station is configured to form a plurality of single battery pack subunits, a plurality of series subunits and a plurality of parallel subunits loads, so that the different kinds of the subunits are independently connected to their corresponding loads for transmission of the DC power from the subunits to their corresponding loads; after the transmission of DC power from the subunits to their corresponding loads is completed, the second battery packs in the at least one buck station are disconnected from the user loads and connected in series, and then connected to the cable for being charged; and
the power grid management center is configured to switch connection modes of the battery packs in the at least one boost station and the at least one buck station between series connection and parallel connection and to switch connection and disconnection of at least one booster station with the cable as well as to switch connection and disconnection of at least one buck station with the cable, to achieve storage, boost, transmission, buck and supply of DC power.

In an arrangement, after the transmission of the DC power is completed, the series subunits in the at least one buck station are configured as a DC power supply to supply power to a power grid with a voltage lower than a voltage of the series subunits in the at least one buck station.

In an arrangement, the at least one boost station comprises a plurality of boost substations connected in series; the plurality of boost substations are respectively installed at different locations; the DC power supply consists of a plurality of DC power supplies which are different from each other in type and are configured to charge the first battery packs of each of the boost substations.

In an arrangement, the boost station is adjacent to the DC power supply and is able to output voltage; the buck station is established in a center of a user group and is able to provide an access voltage; and a plurality of backup power supply inlets and a plurality of power supply outlets are further provided to access boost stations and buck stations.

The invention is as disclosed in claims. Any described arrangements not covered by claims are for information purposes only.

Specifically, the full DC boost-buck power transmission system is constructed as follows.

(1.1) The boost station is configured to boost voltage in the full DC boost-buck power transmission system, where the boost station comprises a first battery pack unit, which is composed of the charging series stack including a certain number of battery packs, and hardware and software serving the charging series stack.

The charging series stack is composed of a certain number of battery packs with the same model, the same nominal voltage, and the same rated capacity, where the number of the battery packs is determined by the voltage of the power grid and the specifications of the battery packs. All battery packs are connected in parallel and accept charging from the DC power supply on the primary side. the DC power supply may be any kind of a photovoltaic power plant, a fuel cell power plant, a wind power generator that directly outputs DC, a DC power supply rectified by AC power outputted from hydropower stations, a DC power supply rectified by AC power outputted from thermal power stations, a DC hydropower station and a thermal power station. After the charging for the battery packs in the boost station is completed, the battery packs are connected in series to become a high voltage power supply. After connecting to the power grid to supply power, the first battery pack unit enters a process of discharge and performs remote power transmission to the buck station. After the discharging is completed, the first battery pack unit is disconnected from the high-voltage cable, and the battery packs in the first battery pack unit are changed to be connected in parallel again, so as to accept low-voltage charging from the DC power supply on the primary side. The above-mentioned process can be repeated cyclically to realize the function of the full DC buck-boost power transmission system.

In order to achieve the above-mentioned functions, the hardware of the boost station should include a fixing mechanism and device for installing the battery packs, cables, interfaces, switches, transfer switches, power diodes, ground wires, and hardware for detecting and managing the battery packs. The cables, the interfaces, the switches, the transfer switches, the power diodes, the ground wires, and the hardware for detecting and managing the battery pack are configured for functions of the series connection, parallel connection and series-parallel interchange function of the battery packs. Based on the hardware of the boost station, the battery packs in the boost station can accept charging and connect to high voltage for remote power transmission after being installed properly. Besides, the battery packs can be replaced or updated as needed.

The nominal voltage and optimal charging current of the battery packs in the charging series stack should be determined by the output voltage and output current of the above-mentioned DC power supply, and further determined by the grid voltage, where the specific relationship is as follows.

The charging condition:
the output voltage of the primary DC power supply is $V_c$; the nominal voltage of the battery pack is $V_b \approx V_c/1.2$; the optimal charging current $I_b$ and the number n of the battery packs should preferably match the output current $I_c$ of the primary DC power supply, that is

$$I_c \approx nI_b$$

Power transmission condition:
the nominal voltage of the power grid is $V_w$; the nominal voltage of the battery packs is $V_b$, if the charging series stack formed by all the battery packs are connected to the power grid for power supply, the transmission condition should satisfy the following relationship:

$$V_w \approx nV_b;$$

Therefore, the number of the battery packs are determined as follows:

$$n \approx V_w/V_b.$$

(1.2) The buck station is configured to buck voltage in the full DC boost-buck power transmission system, where the buck station comprises a second battery pack unit, which is composed of the series stack to be charged including a certain number of battery packs, and hardware and software serving the charging series stack.

The series stack to be charged is composed of a certain number of the battery packs with the same charging and discharging characteristics and the same optimal charging current, where the number of the battery packs is determined by the grid voltage, the load demand, and the specifications of the battery pack. In the second battery pack unit, all the battery packs are connected in series and connected to the power grid through the high-voltage cable for charging. After the charging for the battery packs in the buck station is completed, all the battery packs are disconnected from the high-voltage power grid, and form a plurality of new DC power supply to supply power to the loads (electrical appliances) and electricity consumers, or connected in parallel to be a power supply with low voltage and high current to supply power to the loads, or connected in series to form a DC power supply with different voltages to supply power to the loads, microgrids, distributed power grid and local power grid. After the discharge of each of the battery packs in the buck station is completed, all the battery packs are disconnected from the load and the load grid, and are changed to be connected in series again, and connected to the power grid through the high-voltage cable for charging. The buck station operates repeatedly in this way according to the above-mentioned process.

The hardware of the buck station includes a fixing mechanism and device for installing the battery packs, cables, interfaces, switches, transfer switches, power diodes and ground wires. The cables, the interfaces, switches, transfer switches, power diodes and ground wires are provided for series connection, parallel connection and series-parallel interchange of the battery packs, separating and combining the charged battery packs, and connecting the charged battery packs to the power grid, loads and the ground wire. Based on the hardware of the buck station, the battery packs in the buck station can be charged and connected to the loads so as to supply power to the users after installed properly. Besides, the battery packs can be replaced or updated as needed.

A nominal voltage, a rated capacity of the battery pack string of the series stack to be charged and the optimal charging current are determined by the following conditions.

The selection of each of the battery packs in the series stack to be charged is not restricted by the specification of the battery packs in the charging series stack. The optimal charging current of all battery packs must be the same, while their nominal voltages and rated capacities can be different, but the nominal value and number of voltage, current intensity of the battery pack string to be charged are determined by the type and number of loads.

The actual total voltage $V_{bc}$ of the charged battery string is as follows:

$$V_{bc} \approx V_w / 1.2$$

where $V_w$ is an actual output voltage of the power grid transmitting through the high-voltage power grid.

According to requirements of the loads, the series stack to be charged can be constructed to form a series stack, a parallel combination and a battery pack unit.

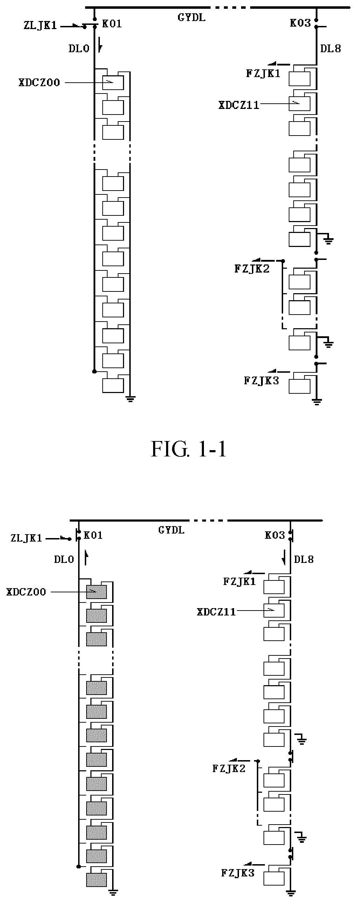

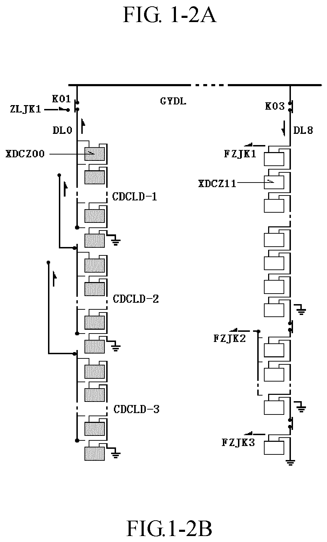

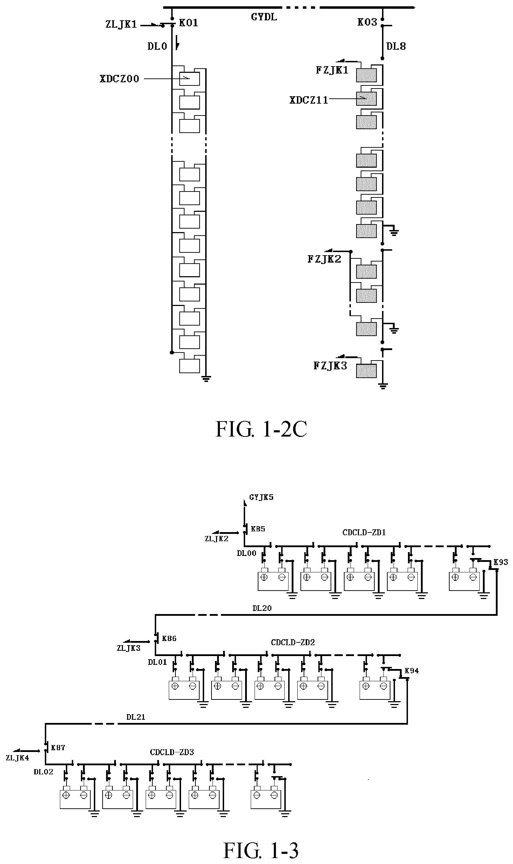

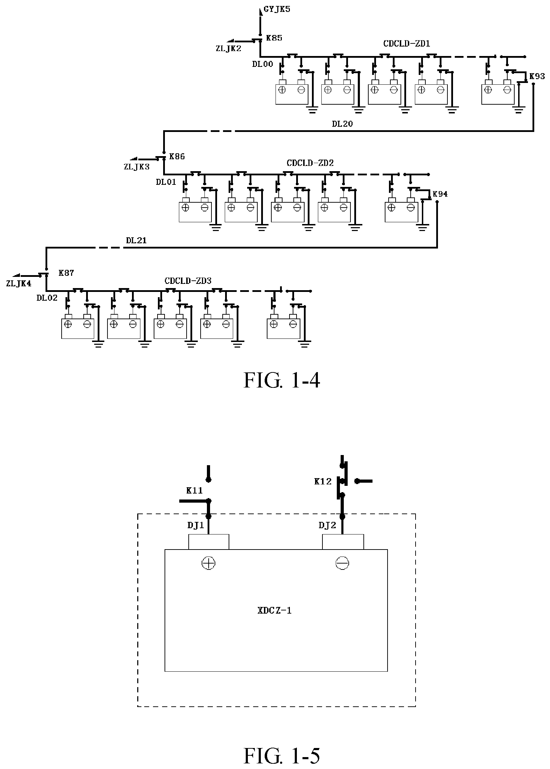

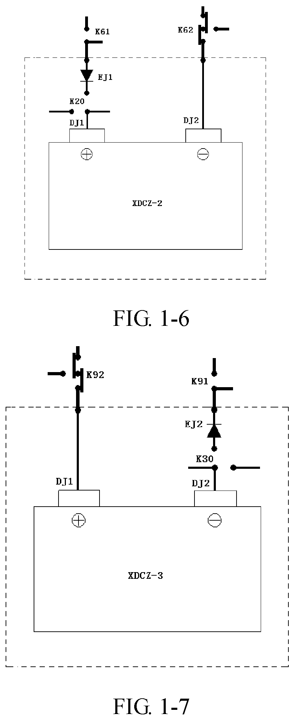

Figs. 1-1, 1-2A, 1-2B and 1-2C show a circuit of the full DC buck-boost power transmission system composed of a boost station and a buck station in different working states.

As show in Fig. 1-1, in the circuit of the full DC buck-boost power transmission system, the DC power supply charges the first battery pack unit, where each of the battery packs in the second battery pack unit is neither connected to the power grid nor to the load. A first part of the battery packs in the second battery pack unit is connected in series to form the series subunit to supply power to the load; a second part of the battery packs in the second battery pack unit is connected in parallel to be the parallel subunit to supply power to the load; and a third part of the battery packs in the second battery pack unit form the single battery pack unit to independently supply power to the load.

As shown in Fig. 1-2A, the first battery pack unit is connected to the power grid through the high-voltage power grid to charge the second battery pack unit, and the second battery pack unit is connected to the power grid through the high-voltage cable to be charged.

As shown in Fig. 1-2B, the first series stack in the first battery pack unit is divided into three first series sub-stacks, where each of the series sub-stack has the same number of battery packs, and the series sub-stacks are alternately connected to the high-voltage power grid to charge the second battery pack unit.

As shown in Fig. 1-2C, the battery packs in the first battery pack unit are connected in parallel and charged by the DC power supply again. Besides, the second series stack in the second battery pack unit is separated into three power supplies, including a series subunit with a plurality of battery packs connected in series, a parallel subunit with a plurality of battery packs connected in parallel, and a single battery pack subunit. The series subunit, the parallel subunit and the single battery pack subunit are respectively connected to their load interfaces to supply power to their loads.

(1.3) In the full DC buck-boost transmission system, battery packs can be connected in series in remote locations to meet the voltage requirements and connected to the DC power grid to become a DC power source. In other words, several low-voltage boost stations can be connected in series to form a total high-voltage boost station. The former is called a boost substation and the latter is called a boost station. Each of the boost substations has its own primary power supply for charging. These primary power supplies can be in different locations, and they can also be power supplies of different nature. The number of battery packs in the boost station is determined by the grid voltage and the nominal voltage of the battery packs. Figs. 1-3 and 1-4 show a diagram of the structure and status of the boost station.

(1.4) Some components and accessories are provided in the ordinary battery packs to adapt to the application in the present disclosure. According to whether the devices are installed or not, and the method of installation, the battery packs can be divided into A-type battery pack, B-type battery pack and C-type battery pack, in which:

As shown in Fig. 1-5, the A-type battery pack is an ordinary battery pack without any additional components or accessories. However, in actual appliances, a single-pole single-throw switch is provided at the positive electrode of the boost station, and a single-pole double-throw switch is provided at the negative electrode of the buck station.

As shown in Fig. 1-6, in the B-type battery pack, a diode is provided at a positive electrode of the ordinary battery pack to allow current to flow into the battery pack and prevent current from flowing out of the battery pack. There is a single-pole double-throw switch provided between the diode and the positive electrode. When the positive electrode of the battery pack is connected to the diode through the switch, the battery can be charged; when the switch is connected to the load, the battery packs supply power to the load. In addition, a single-pole single-throw switch is provided at the positive electrode of the buck station and a single-pole double-throw switch is provided at the negative electrode of the buck station.

As shown in Fig. 1-7, in the C-type battery pack, a diode is provided at a negative electrode of the ordinary battery pack to allow current to flow out of the battery pack and prevent current from flowing into the battery pack. There is a single-pole double-throw switch provided between the diode and the negative electrode. When the negative electrode of the battery pack is connected to the diode through the switch, the battery can be charged; when the switch is connected to the load, the battery packs supply power to the load. In addition, a single-pole double-throw switch is provided at the positive electrode of the buck station and a single-pole single-throw switch is provided at the negative electrode of the buck station.

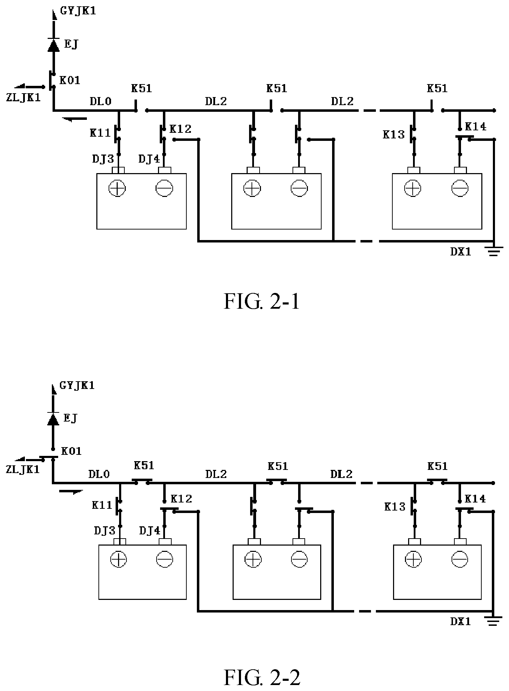

(2.1) FIG 2-1 shows a circuit in which the first battery pack unit in the boost station adopting the A-type battery packs is connected to the power grid through the high-voltage cable for power supplying; as shown in Fig. 2-2, the states switches are changed, so that each of the battery packs in the first battery pack unit is connected in parallel, where the positive electrode of the battery packs is connected to the DC power supply, and the negative electrode of the battery packs is connected to the ground wire, so as to be charged from the first battery pack unit.

(3.1) After the charging on the buck station is completed, the second battery pack unit in the buck station adopting the A-type battery packs forms subunits with three typical connection modes, including a single battery pack subunit, a parallel subunit (parallel combination of the battery packs) and a series subunit (battery packs connected in series), where the specific circuit diagram and implementation process are given as below.

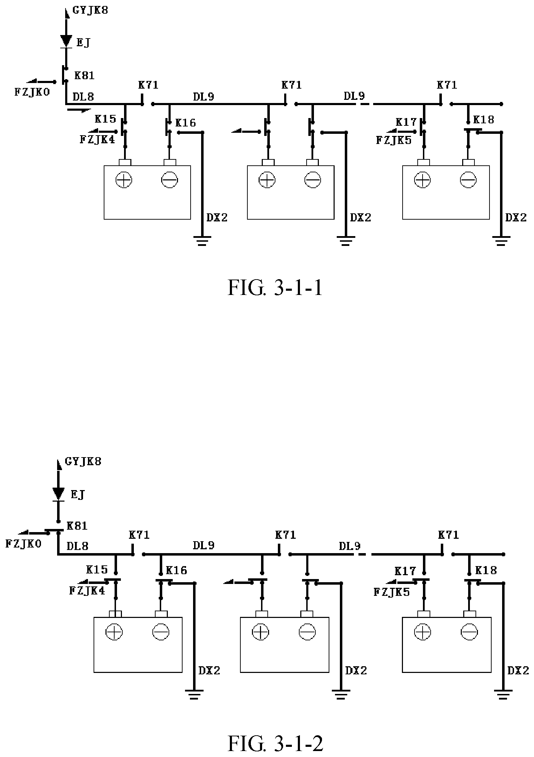

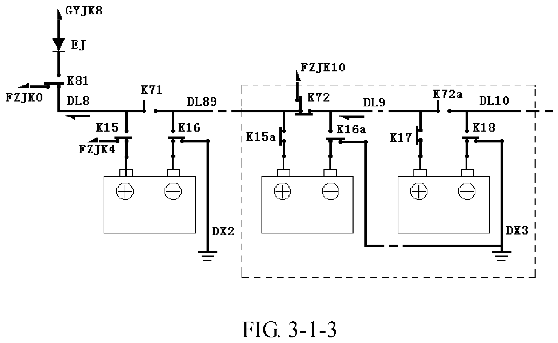

(3.2) As shown in Fig. 3-1-1, in the buck station, each of the A-type battery packs in the second battery pack unit is connected in series to form the second series stack for charging. The battery packs are connected to the high-voltage interface, and the diode is turned on, so that all the battery packs are charged, where the diode is provided for preventing the battery packs in the second battery pack from sending power to the high-voltage power grid.

As shown in Fig. 3-1-2, after the charging in the second battery pack unit is completed, the states of the switches in each of the battery packs are changed, so that each of the battery packs become a single battery pack subunit and is used as a load power supply respectively.

(3.3) As shown in Fig. 3-1-3, after the charging on the buck side is completed, a part of the battery packs is connected in parallel to form a parallel subunit to become a power supply for the loads.

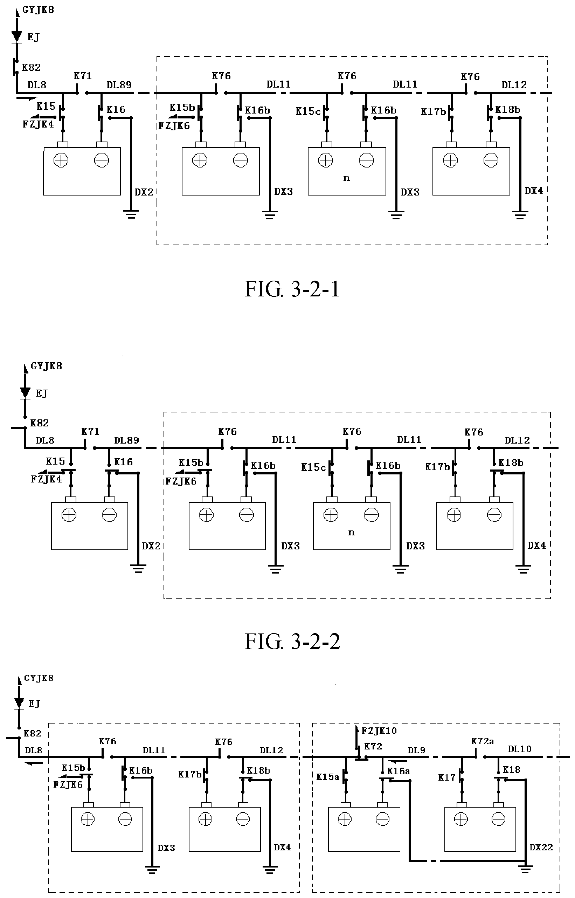

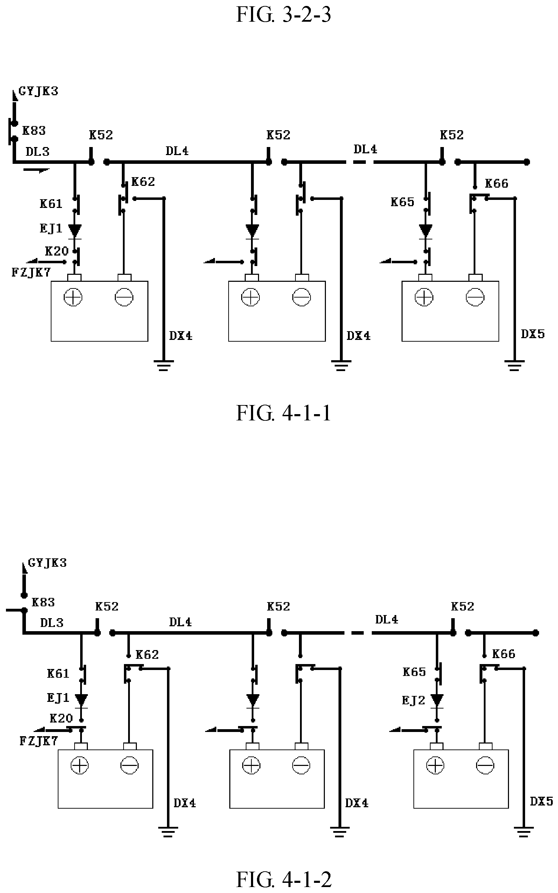

(3.4) FIG 3-2-1 shows a circuit according to an arrangement of the present disclosure, in which the second battery pack unit in the buck station adopting the A-type battery packs for charging on the buck side. As shown in Fig. 3-2-2, after the charging on the buck side is completed, a part of the battery packs in the second battery pack unit is connected in series to form a series subunit, where each of the battery packs is connected in series to become a series subunit.

(3.5) As shown in Fig. 3-2-3, after the charging on the buck side is completed, a part of the battery packs in the second battery pack unit is connected in series to form a series subunit, and a part of the battery packs are connected in parallel to become a parallel subunit, and then the series subunit and parallel subunit are configured to supply power to the corresponding loads.

(4.1) After the charging on the buck station is completed, the second battery pack unit in the buck station adopting the B-type ordinary battery packs forms subunits with three typical connection modes, including a single battery pack subunit, a parallel subunit and a series subunit, where the specific circuit diagram and implementation process are given as below.

(4.2) As shown in Fig. 4-1-1, the second battery pack unit in the buck station adopting the B-type battery pack is charging on the buck side. The switch 83 is connected to the high-voltage interface.

As shown in Fig. 4-1-2, after the charging on the buck side is completed, the switch K83 is turned off. By changing the state of the switches in the positive electrode and the negative electrode of each of the battery packs, each of the B-type battery packs can independently supply their own loads.

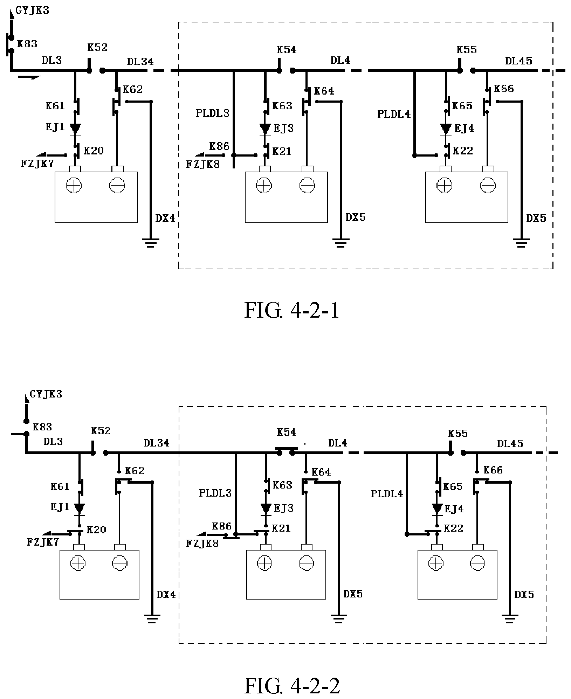

(4.3) As shown in Fig. 4-2-1, after the charging of the B-type battery on the buck side is completed, a part of the battery packs in the second battery pack unit is connected in parallel to form the parallel subunit, where each of the battery packs in the parallel subunit is provided with a bypass cable. When each of the battery packs in the second battery pack unit is charging on the buck side, the bypass cables are left floating.

As shown in Fig. 4-2-2, after the charging of the battery packs in the second battery pack unit is completed, the positive electrode of each of the battery packs is connected to the bypass cable, and the other end of each of the battery packs is connected to the ground wire, so that the battery packs are connected in parallel to supply power.

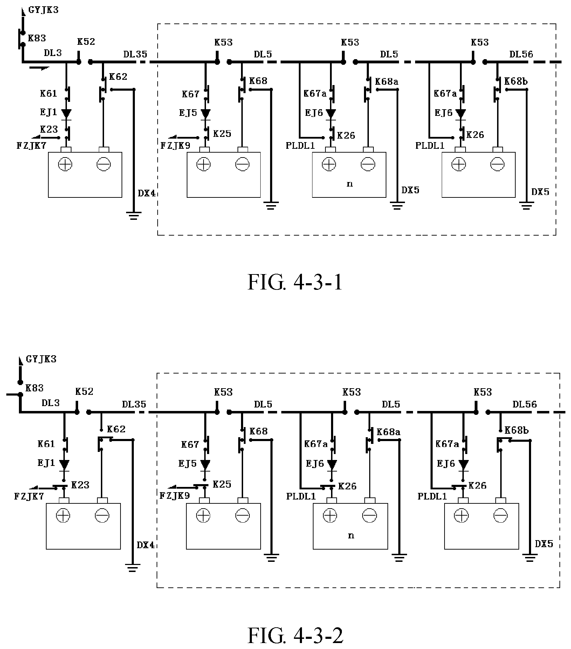

(4.4) As shown in Fig. 4-3-1, the second series stack formed by the B-type battery packs in the second battery pack unit is charging on the buck side, where the circuit in Fig. 4-3-1 is the same as that in Fig. 4-2-1, and the bypass cable of the first battery pack in the series stack can be omitted.

As shown in Fig. 4-3-2, after the charging on the buck side is completed, the battery packs in the second battery pack unit are connected in series to form a series subunit to supply power to the loads.

(4.5) As shown in Figs. 4-4-1 and 4-4-2, after the charging on the buck side is completed, a part of the B-type battery packs in the second battery pack unit are connected in series to form a series subunit, and a part of the B-type battery packs are connected in parallel to become a parallel subunit, and then the series subunit and parallel subunit are configured to supply power to the corresponding loads.

(5.1) After the charging on the buck station is completed, the second battery pack unit in the buck station adopting the C-type ordinary battery packs forms subunits with three typical connection modes, including a single battery pack subunit, a parallel subunit and a series subunit, where the specific circuit diagram and implementation process are given as below.

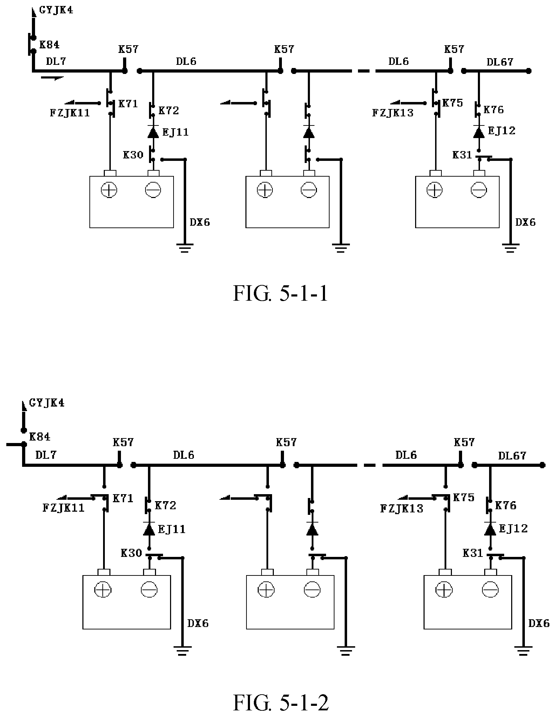

(5.2) As shown in Fig. 5-1-1, the second battery pack unit in the buck station adopting the C-type battery pack is charging on the buck side.

As shown in Fig. 5-1-2, after the charging on the buck side is completed, the states of the switches in the positive electrode and the negative electrode of each of the battery packs are changed, each of the C-type battery packs can independently supply their own loads.

(5.3) As shown in Figs. 5-2-1 and 5-2-2, after the charging of the C-type battery on the buck side is completed, a part of the battery packs in the second battery pack unit is connected in parallel to form the parallel subunit.

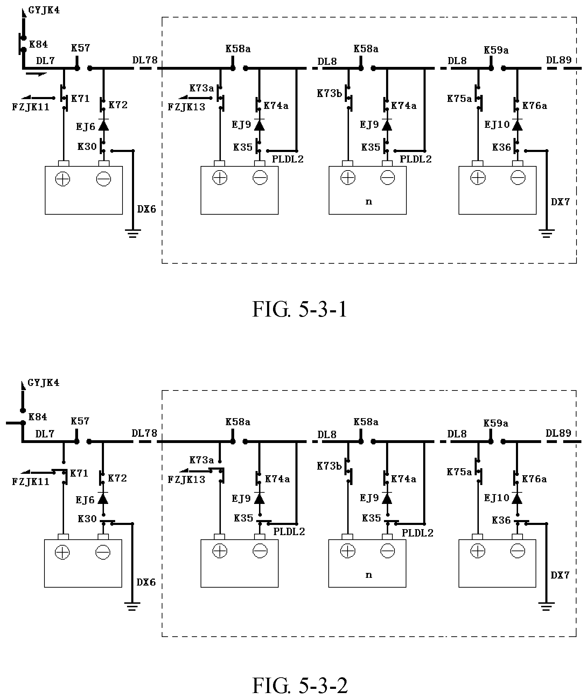

(5.4) As shown in Fig. 5-3-1, the second series stack formed by the C-type battery packs in the second battery pack unit is charging on the buck side, where a bypass cable is provided at the negative electrode of each of the battery packs.

As shown in Fig. 5-3-2, after the charging on the buck side is completed, the battery packs in the second battery pack unit are connected in series to form a series subunit to supply power to the loads.

(5.5) As shown in Figs. 5-4-1 and 5-4-2, after the charging on the buck side is completed, a part of the C-type battery packs in the second battery pack unit are connected in series to form a series subunit, and a part of the C-type battery packs are connected in parallel to become a parallel subunit, and then the series subunit and parallel subunit are configured to supply power to the corresponding loads.

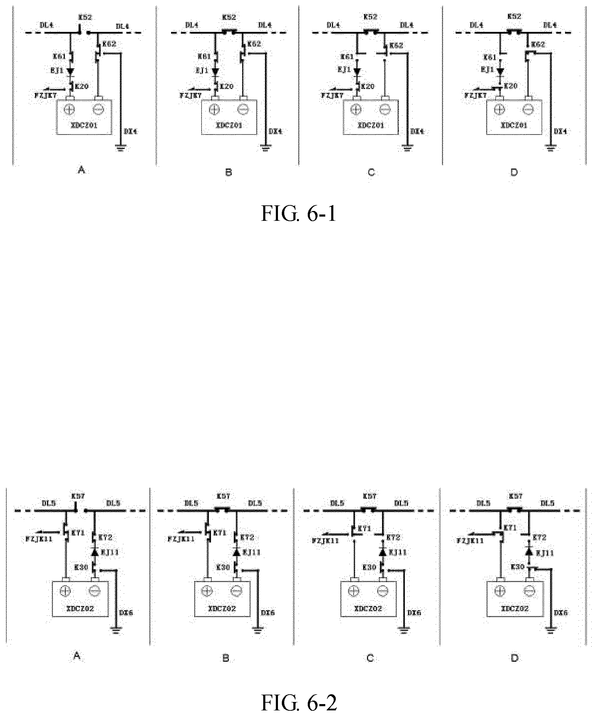

(6.1) As shown in Figs. 6-1 and 6-2, regardless of whether the above-mentioned second battery pack unit adopts the A-type battery pack, the B-type battery pack or the C-type battery pack, after the charging on the buck side is completed, the battery packs in the second battery pack unit can be moved away from the installation positions to supply power to the loads, or supply power to the loads without being moved away from the installation positions.

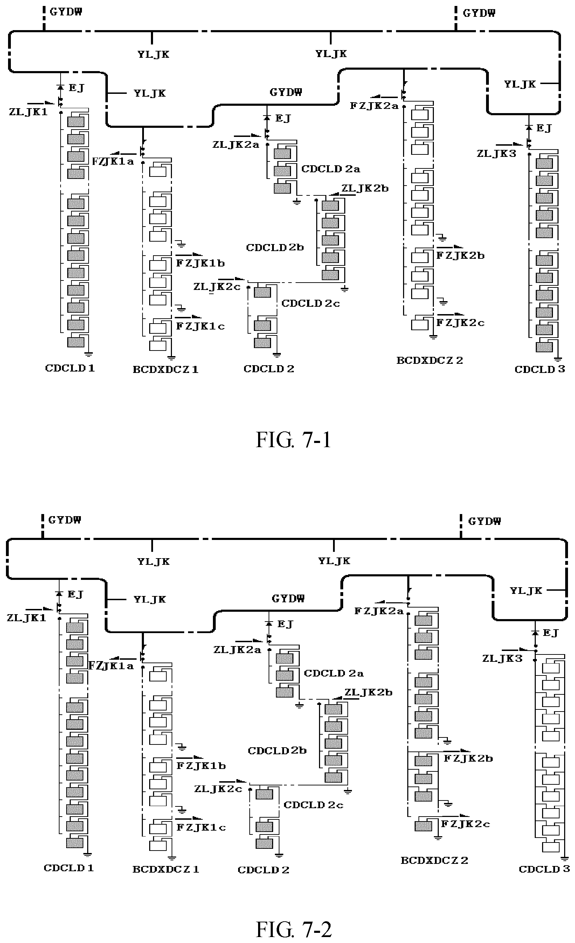

(7.1) As shown in Figs. 7-1 and 7-2, the full DC buck-boost power transmission system provided in the present disclosure is actually an open full DC buck-boost power station and transmission grid, which has the following characteristics.

(1) Instead of one boost station is connected to one buck station, in the full DC high-voltage transmission and transformation power grid, a plurality of boost stations are connected to a plurality of buck stations for charging.

(2) The DC power supply for maintaining the power grid on the primary side is not directly connected to the power grid through the high-voltage power grid. Therefore, the full DC buck-boost power transmission system can accept the power feed with different types and different power generation amounts from the DC power supply on the primary side, where the power feed includes tolerance intermittent power generation and random power generation.

(3) The load and the secondary power grid are not directly connected to the power grid through the high-voltage power grid, so that their working status are not influenced by the operation of the power grid.

(7.2) In order to ensure that the DC power supply on the primary side continuously supplies power to the open full DC high voltage transmission and distribution power grid, the boost station should provide with two or more sets of the first battery pack unit for receiving the power input from the DC power supply on the primary side in turn. Similarly, in order to ensure that the buck station continuously supplies power to the loads, two or more sets of the second battery pack units should be provided.

It should be noted that, if the DC power supply on the primary side generates power intermittently or randomly, different measurement should be implemented according to the charging condition of the first battery pack unit:

(1) if the first battery pack unit is fully charged, the charging is stopped and the first battery pack unit is connected to the power grid through the high-voltage cable; if the DC power source is still supplying power, it charges another (or standby) first battery pack unit.

(2) If the DC power supply has stopped supplying power but the first battery pack unit is not fully charged, the first battery pack unit continues to be charged by the DC power supply in the next time; or, if the first battery pack unit without being fully charged has reached the voltage standard required by the power grid, it can also be connected to the power grid without being charged for the next time.

In the present disclosure, the battery packs are adopted as the main component and the conversion of the connection mode is applied, so that the battery packs form a parallel connection for low-voltage charging, and then the battery packs are changed to be connected in series to obtain a high-voltage power to supply power to the second battery pack unit. After the charging for the battery packs in the second battery pack unit is completed, the second battery pack unit is divided into a plurality of single battery pack subunits, a plurality of parallel subunits and a plurality of series subunits to supply power to their corresponding loads. After the DC power supply of the second battery pack unit is completed, the connection modes of the first and the second battery pack units are respectively restored, and then the system is performed repeatedly in the above-mentioned way, thereby achieving storage, boost, power transmission, buck and supply of the DC power. Since there is no AC-DC conversion in the process, the system provided in the present disclosure is called the full DC buck-boost transmission system.

## BRIEF DESCRIPTION OF THE DRAWINGS

FIG 1-1 schematically shows a circuit of a full DC buck-boost power transmission system in a working state according to an arrangement of the present disclosure.
In the drawing:

GYDL: a high-voltage cable 130 (i.e., the high-voltage power grid);

K01: a switch 01, a single-pole double-throw switch, which is connected to the DC power supply, so that all the battery packs in the first battery pack unit are connected in parallel for charging; K03: a switch 03, a single-pole single-throw switch; DL0: a cable 0; DL8: a cable 8;

ZLJK1: a DC interface 1, configured to connect to the DC power supply, where the ZLJK1 is connected to the positive electrode of the battery packs XDCZ00 in the first battery pack unit;

FZJK1: a load interface 1, an interface between the DC power supply formed by the series subunit and the loads, and is disconnected from an positive electrode of the battery packs; FZJK2: a load interface 2, an interface between the DC power supply formed by the parallel subunit and the load, which is disconnected from an positive electrode of each of the battery packs; FZJK3: a load interface 3, an interface between the DC power supply form by the single battery pack subunit and the load, which is disconnected from an positive electrode of the battery pack;

XDCZ00: a first battery pack unit 00 without fill color in the drawing, where all the battery packs are connected in parallel for charging; XDCZ11: a second battery pack unit 11without fill color in the drawing, where the battery packs are not charged.

FIG 1-2A schematically shows the circuit of the full DC buck-boost power transmission system in a working state according to the arrangement of the present disclosure.
In the drawing:

GYDL: a high-voltage cable 130 (i.e., the high-voltage power grid);

K01: a switch 01, which is configured to connect the cable to the high-voltage cable, so that all the battery packs in the first battery pack unit are connected in series to become a high-voltage power supply; K03: a switch 03, which is connected to the high-voltage cable, so that all the battery packs in the first battery pack unit are charged; DL0: a cable 0; DL8: a cable 8;

ZLJK1: a DC interface 1, configured to connect to the DC power supply, where the ZLJK1 is disconnected from the battery packs;

FZJK1: a load interface 1, an interface between the DC power supply formed by the series subunit and the loads, which is disconnected from the battery packs; FZJK2: a load interface 2, an interface between the DC power supply formed by the parallel subunit and the load, which is disconnected from an positive electrode of the battery packs; FZJK3: a load interface 3, an interface between the DC power supply formed by the single battery pack subunit and the load, which is disconnected from the battery pack;

XDCZ00: a first battery pack unit 00 with gray in the drawing, where all the battery packs are connected in series to supply power to the second battery pack unit; XDCZ11: a second battery pack unit 11 without fill color, where all the battery packs connected in series are charging.

FIG 1-2B schematically shows the circuit of the full DC buck-boost power transmission system in a working state according to the arrangement of the present disclosure.
In the drawing:

GYDL: a high-voltage cable 130 (i.e., the high-voltage power grid);

K01: a switch 01, which is configured to connect the cable 0 to the high-voltage cable; K03: a switch 03, which is configured to connect the cable 8 to the high-voltage cable; DL0: a cable 0; DL8: a cable 8;

CDCLD-1: a first charging series stack 1, the number of battery packs in the first charging series stack is one-third of the number of battery packs in the first battery pack unit, which is connected to the high-voltage cable through the switch 01 to transmit power to the grid; CDCLD-2: a second charging series stack 2, the number of battery packs in the first charging series stack is one-third of the number of battery packs in the first battery pack unit, which is connected to the high-voltage cable when supplying power; CDCLD-3: a third charging series stack 3, the number of battery packs in the first charging series stack is one-third of the number of battery packs in the first battery pack unit, which is connected to the high-voltage cable when supplying power.

ZLJK1: a DC interface 1, configured to connect to the DC power supply, where the ZLJK1 is disconnected from the battery packs;

FZJK1: a load interface 1, an interface between the DC power supply formed by the series subunit and the loads, which is disconnected from the battery packs; FZJK2: a load interface 2, an interface between the DC power supply formed by the parallel subunit and the load, which is disconnected from an positive electrode of the battery packs; FZJK3: a load interface 3, an interface between the DC power supply formed by the single battery pack subunit and the load, which is disconnected from the battery pack;

XDCZ00: a first battery pack unit 00 with gray in the drawing, where all the battery packs are connected in series to supply power to the second battery pack unit; XDCZ11: a second battery pack unit 11 without fill color, where all the battery packs connected in series are charging.

FIG 1-2C schematically shows the circuit of the full DC buck-boost power transmission system in a working state according to the arrangement of the present disclosure.
In the drawing:

> GYDL: a high-voltage cable 130 (i.e., the high-voltage power grid);
> K01: a switch 01, which is connected to the DC power supply; K03: a switch 03, which is disconnected from the DC power supply; DL0: a cable 0; DL8: a cable 8;
> ZLJK1: a DC interface 1, configured to connect to the DC power supply, where the ZLJK1 is connected to the positive electrode of the battery packs XDCZ00 in the first battery pack unit;
> FZJK1: a load interface 1, an interface between the DC power supply formed by the series subunit and the loads, which is connected to an positive electrode of the first battery pack in the series subunit; FZJK2: a load interface 2, an interface between the DC power supply formed by the parallel subunit and the load, which is connected to an positive electrode of the first battery pack in the parallel subunit; FZJK3: a load interface 3, an interface between the DC power supply form by the single battery pack subunit and the load, which is connected to an positive electrode of the battery pack;
> XDCZ00: a first battery pack unit 00 without fill color in the drawing, where all the battery packs are connected in parallel for charging; XDCZ11: a second battery pack unit 11 with gray in the drawing, where the battery packs are fully charged; the battery packs in the series stack are connected in series, and the battery packs in the parallel stack are connected in parallel.

FIG 1-3 schematically shows a circuit according to an arrangement of the present disclosure, in which the charging series stacks at different locations are connected in series for supplying power.
In the drawing:

> GYJK5: a high-voltage interface 5;
> CDCLD-ZD1: a first charging series sub-stack 1;
> CDCLD-ZD2: a second charging series sub-stack 2; CDCLD-ZD3: a third charging series sub-stack 3.
> DL00: a cable 00, configured to connect the first charging series sub-stack 1 to the switch 85 or the DC interface 2; DL01: a cable 01, configured to connect the second charging series sub-stack 2 to the switch 86 or the DC interface 3; DL02: a cable 02 , configured to connect the third charging series sub-stack 3 to the switch 87 or the DC interface 4; DL20: a cable 20, configured to connect the first charging series sub-stack 1 to the second charging series sub-stack 2; DL21: a cable 21, configured to connect the second charging series sub-stack 2 to the third charging series sub-stack 3;
K85: a switch 85, a single-pole double-throw switch, connects the cable 00 to the high-voltage interface; K86: a switch 86, a single-pole double-throw switch, connects the cable 20 to cable 01; K87: a switch 87, a single-pole double-throw switch, connects the cable 21 to the cable 02; K93: a switch 93, a single-pole double-throw switch, connects a negative electrode of the last battery pack in the first charging series sub-stack 1 to the cable 20; K94: a switch 94, a single-pole double-throw switch, connects a negative electrode of the last battery pack of the second charging series sub-stack 2 to the cable 21; a negative electrode of each of battery packs is connected to a positive electrode of the next battery pack.

FIG 1-4 schematically shows the circuit according to the arrangement of the present disclosure, in which the charging series stacks at different locations are charged by different DC power supplies.
In the drawing:

> GYJK5: a high-voltage interface 5;
> CDCLD-ZD1: a first charging series sub-stack 1;
> CDCLD-ZD2: a second charging series sub-stack 2; CDCLD-ZD3: a third charging series sub-stack 3.
> DL00: a cable 00, where the switches in the cable are turned on, so that the battery packs in the first charging series sub-stack are connected in parallel; DL01: a cable 01, where the switches in the cable are turned on, so that the battery packs in the first charging series sub-stack are connected in parallel; DL02: a cable 02 , where the switches in the cable are turned on, so that the battery packs in the first charging series sub-stack are connected in parallel; DL20: a cable 20; DL21: a cable 21;
> K85: a switch 85, connects the cable 00 to the high-voltage interface 2; K86: a switch 86, connects the cable 01 to the DC interface 3; K87: a switch 87, connects the cable 21 to the DC interface 4; K93: a switch 93, connects a negative electrode of the last battery pack in the first charging series sub-stack 1 to the ground wire; K94: a switch 94, connects a negative electrode of the last battery pack of the second charging series sub-stack 2 to the ground wire; a negative electrode of each of battery packs is connected to the ground wire.

FIG 1-5 schematically shows an A-type battery pack according to an arrangement of the present disclosure.
In the drawing:

XDCZ-1: an A-type battery pack, includes a plurality of common batteries connected in parallel or in series, as shown in the dotted box; DJ1: a positive electrode of the battery pack; DJ2: a negative electrode of the battery pack; K11: a switch 11, a single-pole double-throw switch; K12: a switch 12, a single-pole three-throw switch; the K11 and the K12 are both the switches provided for the A-type battery packs in the boost station or the buck station.

FIG 1-6 schematically shows a B-type battery pack according to an arrangement of the present disclosure.
In the drawing:

XDCZ-2: a B-type battery pack, includes a plurality of common batteries connected in parallel or in series, as shown in the dotted box; DJ1: a positive electrode of the battery pack; and DJ2: a negative electrode of the battery pack; EJ1: a diode 1 that only allow current to flow out of the battery pack (or other electronic devices capable of unidirectional conduction), installed in front of the positive electrode of the B-type battery pack; K20: a switch 20, a single-pole double-throw switch, provided between the positive electrode of the battery pack and the diode 1.
K61: a switch 61, a single-pole double-throw switch; K62: a switch 62, a single-pole three-throw switch; the K61 and the K62 are both the switches provided for the B-type battery packs in the boost station or the buck station.

FIG 1-7 schematically shows a C-type battery pack according to an arrangement of the present disclosure.
In the drawing:

XDCZ-3: a C-type ordinary battery pack, includes a plurality of common batteries connected in parallel or in series, as shown in the dotted box;
DJ1: a positive electrode of the battery pack; and DJ2: a negative electrode of the battery pack; EJ2: a diode 2 that allow current to flow out of the battery pack (or other electronic devices capable of unidirectional conduction), installed in front of the negative electrode of the C-type battery pack; K30: a switch 30, a single-pole double-throw switch, configured to connect the negative electrode of the battery pack to the diode 2.

K91: a switch 91, a single-pole double-throw switch; K92: a switch 92, a single-pole three-throw switch; the K11 and the K12 are both the switches provided for the C-type battery packs in the boost station or the buck station.

FIG 2-1 schematically shows a circuit according to an arrangement of the present disclosure, in which the first battery pack unit in the at least one boost station adopting the A-type battery packs is connected to the power grid through the high-voltage cable for discharging.
In the drawing:

GYJK1: a high-voltage interface 1, connected to the high-voltage cable. EJ: a diode that only allow current flowing out of the battery packs, provided between the charging series stack formed by the A-type battery packs and the high-voltage power grid. ZLJK1: a DC interface 1, connected to the DC power supply.
DL0: a cable 0; DL2: a cable 2, provided between battery packs.
K01: a switch 01, a single-pole double-throw switch, connects the cable 0 to the high-voltage cable; K11: a switch 11, a single-pole single-throw switch, connects the positive electrode of the battery pack to the cable 0; K12: a switch 12, a single-pole double-throw switch, connects the negative electrode of the battery pack to cable 2; K13: a switch 13, a single-pole single-throw switch, connects the positive electrode of the battery pack to the cable 2; K14: a switch 14, a single-pole double-throw switch, connects the negative electrode of the last battery pack to the ground wire 1; K51: switches 51, single-pole single-throw switches; when they are turned on, the battery packs are connected in series; and
DX1: a ground wire.

FIG 2-2 schematically shows the circuit in FIG 2-1, in which the A-type battery packs in the first battery pack unit are connected in parallel for charging on the boost side.
In the drawing:

GYJK1: a high-voltage interface 1, connected to the high-voltage cables. EJ: a diode that only allow current to flow out of the battery packs, provided between the charging series stack formed by the A-type battery packs and the high-voltage power grid. ZLJK1: a DC interface 1, connected to the DC power supply.
DL0: a cable 0; DL2: a cable 2, provided between battery packs.
K01: a switch 01, connects the cable DL0 to the DC interface 1; K11: a switch 11, connects the positive electrode of the battery pack to the cable 1; K12: a switch 12, connects the negative electrode of the battery pack to the ground wire 1; K13: a switch 13, connects the positive electrode of the battery pack to the cable 2; K14: a switch 14, connects the negative electrode of the last battery pack to the ground wire 1; K51: switches 51, when they are turned on, the battery packs are connected in series; and DX1: a ground wire.

FIG 3-1-1 schematically shows a circuit according to an arrangement of the present disclosure, in which a second battery pack unit in a buck station adopting the A-type battery packs is charging on a buck side. In the drawing:

GYJK8: a high-voltage interface 8, connected to high-voltage cables; EJ: a diode that only allow current to flow into the battery packs, provided between the second battery pack unit and the high-voltage power grid; K81: a switch 81, a single-pole double-throw switch, which is connected to the high-voltage interface, so that the battery packs are connected in series for charging.
FZJK0: a load interface 0; FZJK4: a load interface 4; FZJK5: a load interface 5;
DL8: a cable 8, connects the cable to the switch 81; DL9: a cable 9, connects the cables between the battery packs.
K15: a switch 15, a single-pole double-throw switch, configured to connect the positive electrode of the battery pack to the cable 8; K16: a switch 16, a single-pole double-throw switch, connects the negative electrode of the battery pack to the cable 9; K17: a switch 17, a single-pole double-throw switch, connects the positive electrode of the battery pack to the cable 9; K18: a switch 18, a single-pole double-throw switch, connects the negative electrode of the last battery pack to the ground wire 2; K71: a switch 71, a single-pole double-throw switch, which is turned off when the battery packs are being charged; and
DX2: a ground wire 2.

FIG 3-1-2 shows the circuit in FIG 3-1-1, in which the second battery pack unit forms a plurality of single battery pack subunits to supply power to their respective loads after the charging on the buck side is completed.
In the drawing:

GYJK8: a high-voltage interface 8; EJ: a diode that only allow current to flow into the battery packs, provided between the second battery pack unit and the high-voltage power grid;

K81: a switch 81, which is disconnected from the high-voltage interface, and connected to the load interface 0.
FZJK0: a load interface 0; FZJK4: a load interface 4, which is equivalent to the load interface 0; FZJK5: a load interface 5;
DL8: a cable 8, connects the cable to the switch 81; DL9: a cable 9, connects the cables between the battery packs.
K15: a switch 15, configured to connect the positive electrode of the battery pack to the cable 8, or disconnect the positive electrode of the battery pack from the cable 8; K16: a switch 16, connects the negative electrode of the battery pack to the ground wire 2; K17: a switch 17, connects the positive electrode of the battery pack to the load interface 5; K18: a switch 18, connects the negative electrode of the last battery pack to the ground wire 2; K71: a switch 71, which is turned off when the battery packs are supplying power to their corresponding loads; and
DX2: a ground wire 2.

FIG 3-1-3 schematically shows a circuit according to an arrangement of the present disclosure, in which a part of the battery packs of the second battery pack unit in the at least one buck station are connected in parallel to serve as a parallel subunit to supply power to a load after the charging on the buck side is completed.
In the drawing:

GYJK8: a high-voltage interface 8; EJ: a diode that only allow current to flow into the battery packs, provided between the second battery pack unit and the high-voltage power grid; K81: a switch 81, which is disconnected from the high-voltage interface, and connected to the load interface 0.
FZJK0: a load interface 0; FZJK4: a load interface 4, which is equivalent to the load interface 0; FZJK10: a load interface 10;
DL8: a cable 8, connects the cable to the switch 81; DL89: a cable 89, connects the single battery pack subunit to the following parallel subunit (as shown in the dotted box); DL9: a cable 9, provided between the battery packs, so that positive electrodes of all the battery packs in the parallel subunit are connected in parallel; DL10: a cable 10, configured to connect the battery pack in parallel subunit to the following battery pack;
K15: a switch 15, configured to connect the positive electrode of the battery pack to the load interface 4, or connect the positive electrode of the battery pack to the cable 8; K16: a switch 16, connects the negative electrode of the battery pack to the ground wire 2; K15a: a switch 15a, which is turned on so that the positive electrode of the battery pack is connected to the cable 89 and the switch 72; K16a: a switch 16a, configured to connect the negative electrode of the battery pack to the ground wire 3; K17: a switch 17, connects the positive electrode of the battery pack to the cable 9; K18: a switch 18, connects the negative electrode of the last battery pack to the ground wire 2; K71: a switch 71, which is turned off when the battery packs are supplying power to their corresponding loads; K72: a switch 72, a double-pole double-throw switch, which is turned on when the battery packs are supplying power to their corresponding loads; K73: a switch 73, a single-pole double-throw switch, which is turned off when the battery packs are supplying power to their corresponding loads;

DX2: a ground wire 2; and DX3: a ground wire 3.

FIG 3-2-1 schematically shows a circuit according to an arrangement of the present disclosure, in which the second battery pack unit in the buck station adopting the A-type battery packs is charging on the buck side.
In the drawing:

GYJK8: a high-voltage interface 8, connected to high-voltage cables; EJ: a diode that only allow current to flow into the battery packs, provided between the second battery pack unit and the high-voltage power grid; K82: a switch 82, configured to connect the cable 8 to the high-voltage interface 8;

DL8: a cable 8, connects the positive electrode of the battery pack to the switch 81; DL89: a cable 89, connects the single battery pack subunit to the following series subunit (as shown in the dotted box); DL11: a cable 11 for connecting the battery packs in the series subunit. DL12: a cable 12 for connecting the battery packs in the series subunit to the following battery pack;

FZJK4: a load interface 4; FZJK6: a load interface 6;

K15: a switch 15, configured to connect the positive electrode of the battery pack to the cable 8; K16: a switch 16, connects the negative electrode of the battery pack to the cable 89;

K15b: a switch 15b, a single-pole double-throw switch, connects the positive electrode of the battery packs in the series subunit to the cable 89 and then connect to the negative electrode of the previous battery pack; K16b: a switch 16b, a single-pole double-throw switch, connects the negative electrode of the battery pack to the cable 11; K15c: a switch 15c, a single-pole double-throw switch, connects the positive electrode of the battery pack to the cable 11;

K17b: a switch 17b, a single-pole double-throw switch, connects the positive electrode of the battery pack to the cable 11 and connect to the negative electrode of the previous battery pack; K18b: a switch 18b, a single-pole double-throw switch, connects the negative electrode of the last battery pack in the series subunit to the cable 12. K71: a switch 71, which is turned off when the battery packs is being charged; K76: a switch 76, a single-pole double-throw switch, which is turned off when the battery packs is being charged.

n: the number of the battery packs;

DX2: a ground wire 2; DX3: a ground wire 3; and DX4: a ground wire 4.

FIG 3-2-2 schematically shows the circuit in FIG 3-2-1, in which a part of battery packs of the second battery pack unit are connected in series to serve as a series subunit to supply power to a load after the charging on the buck side is completed.
In the drawing:

GYJK8: a high-voltage interface 8; EJ: a diode that only allow current to flow into the battery packs, provided between the second battery pack unit and the high-voltage power grid; K82: a switch 82, disconnect the cable 8 from the high-voltage interface 8;

DL8: a cable 8, connects the positive electrode of the battery pack to the switch 81; DL89: a cable 89, connects the single battery pack subunit to the following series subunit (as shown in the dotted box); DL11: a cable 11 for connecting the battery packs in the series subunit. DL12: a cable 12 for connecting the battery packs in the series subunit to the following battery pack;

FZJK4: a load interface 4; FZJK6: a load interface 6;

K15: a switch 15, configured to connect the positive electrode of the battery pack to the cable 8; K16: a switch 16, connects the negative electrode of the battery pack to the ground wire 2; K15b: a switch 15b, connects the positive electrode of the battery packs in the series subunit to the load interface 89; K16b: a switch 16b, connects the negative electrode of the battery pack to the cable 11; K15c: a switch 15c, connects the positive electrode of the battery pack to the cable 11; K17b: a switch 17b, connects the positive electrode of the battery pack to the cable 11; K18b: a switch 18b, connects the negative electrode of the last battery pack in the series subunit to the ground wire; K71: a switch 71, which is turned off when the battery packs is being charged; K76: a switch 76, which is turned off when the battery packs is being charged.

n: the number of the battery packs;
DX2: a ground wire 2; DX3: a ground wire 3; and DX4: a ground wire 4.

FIG 3-2-3 schematically shows a circuit according to an arrangement of the present disclosure, in which the battery packs in the second battery pack unit simultaneously form a series subunit and a parallel subunit to supply power to their respective loads after the charging on the buck side is completed.
In the drawing:

GYJK8: a high-voltage interface 8; EJ: a diode that only allow current to flow into the battery packs, provided between the second battery pack unit and the high-voltage power grid; K82: a switch 82, disconnect the cable 8 from the high-voltage interface 8;
FZJK6: a load interface 6; FZJK10: a load interface 10;
DL8: a cable 8, connects the positive electrode of the battery pack to the switch 82; DL9: a cable 9 for connecting the battery packs in the parallel subunit; DL10: a cable 10 for connecting the last battery pack in the parallel subunit to the following battery pack; DL11: a cable 11 for connecting the battery packs in the series subunit. DL12: a cable 12 for connecting the battery packs in the series subunit to the parallel subunit;
in the series subunit (the first dotted box):

K15b: a switch 15b, connects the positive electrode of the battery packs in the series subunit to the load interface 89; K16b: a switch 16b, connects the negative electrode of the battery pack to the cable 11; K17b: a switch 17b, connects the positive electrode of the battery pack to the cable 11; K18b: a switch 18b, connects the negative electrode of the last battery pack in the series subunit to the ground wire;
DX2: a ground wire 2; DX3: a ground wire 3; and DX4: a ground wire 4;
In the parallel subunit (the second dotted box):

K15a: a switch 15a, connects the positive electrode of the battery pack to the switch 72; K16a: a switch 16a, connects the negative electrode of the battery pack to the ground wire 22; K17: a switch 17, connects the positive electrode of the battery pack to the load interface 10 through the cable 9; K18: a switch 18, connects the negative electrode of the battery pack with the ground wire 22;
K72: a switch 72, connected to the load interface 10, and is connected to the positive electrode of the parallel subunit through the cable 12 and the cable 9. K73: a switch 73, which is turned off when power is supplying; K76: switch 76, which is turned off when power is supplying; and DX22: a ground wire 22.

FIG 4-1-1 schematically shows a circuit according to an arrangement of the present disclosure, in which the second battery pack unit in the at least one buck station adopting the B-type battery pack is charging on the buck side.
In the drawing:

GYJK3: a high-voltage interface 3, connected to the high-voltage cable; K83: a switch 83, a single-pole double-throw switch, connects the cable 3 to the high-voltage interface 3; DL3: a cable 3 for connecting the switch 83 to the positive electrode of the battery pack; DL4: a cable 4 for connecting the adjacent battery packs.
FZJK7: a load interface 7; EJ1: a diode 1;
K20: a switch 20, a single-pole double-throw switch, connects the positive electrode of the battery pack to the diode 1; K61: a switch 61, a single-pole double-throw switch, connects the diode 1 to the cable 3; K62: a switch 62, a double-pole double-throw switch, connects the negative electrode of the battery pack to the cable 4; K65: a switch 65, a single-pole double-throw switch, connects the diode to the cable 4; K66: a switch 66, a double-pole double-throw switch, connects the negative electrode of the last battery pack to the ground wire 5; K52: a switch 52, a single-pole double-throw switch, which is turned off when the battery packs are being charged.
DX4: a ground wire 4; and DX5: a ground wire 5.

FIG 4-1-2 schematically shows the circuit in FIG 4-1-1, in which the second battery pack unit forms a plurality of single battery pack subunits to supply power to their respective loads after the charging on the buck side is completed.
In the drawing:

GYJK3: a high-voltage interface 3; K83: a switch 83, disconnect the cable 3 from the high-voltage interface 3; DL3: a cable 3 for connecting the switch 83 to the positive electrode of the battery pack; DL4: a cable 4 for connecting the adjacent battery packs.
FZJK7: a load interface 7; EJ1: a diode 1; EJ2: a diode 2;
K20: a switch 20, connected to the load interface 7; K61: a switch 61, connects the diode 1 to the cable 3 (or disconnect the diode 1 from the cable 3);

K62: a switch 62, connects the negative electrode of the battery pack to the ground wire; K65: a switch 65, connects the diode 2 to the cable 4 (or disconnect the diode 2 from the cable 4);

K66: a switch 66, connects the negative electrode of the last battery pack to the ground wire 5; K52: a switch 52, which is turned off when the battery packs are being charged.

DX4: a ground wire 4; and DX5: a ground wire 5.

FIG 4-2-1 schematically shows a circuit according to an arrangement of the present disclosure, in which the second battery pack unit in the at least one buck station adopting the B-type battery pack is charging on the buck side.
In the drawing:

GYJK3: a high-voltage interface 3, connected to the high-voltage cable; K83: a switch 83, a single-pole double-throw switch, connects the cable 3 to the high-voltage interface 3; FZJK7: a load interface 7; FZJK8: a load interface 8; DL3: a cable 3 for connecting the high-voltage interface to the positive electrode of the battery pack; DL34: a cable 34 for connecting the single battery pack subunit to the parallel subunit; DL4: a cable 4 for connecting the adjacent battery packs in the parallel subunit; DL45: a cable 45 for connecting the parallel subunit to the following battery pack; PLDL3: a bypass cable 3, where one end of the PLDL3 is connected to the DL34, the other end of the PLDL3 is connected to the switch K21 through the switch K86; PLDL4: a bypass cable 4, one end of the PLDL4 is connected to DL4, and the other end of the PLDL4 is connected to the switch K22;

EJ1: a diode 1; EJ3: a diode 3; EJ4: a diode 4; K20: a switch 20, connects the positive electrode of the battery pack to the diode 1; K61: a switch 61, connects the diode 1 to the cable 3; K62: a switch 62, connects the negative electrode of the battery pack to the cable 34.

K21: a switch 21, a single-pole double-throw switch, connects the positive electrode of the first battery pack in the parallel subunit to the diode 3. K63: a switch 63, a single-pole double-throw switch, connects the diode 3 at the positive electrode of the first battery pack in parallel subunit to the cable 34: K64: a switch 64, a double-pole double-throw switch, connects the negative electrode of the first battery pack in the parallel subunit to the cable 4.

K22: a switch 22, a single-pole double-throw switch, connects the positive electrode of the last battery pack in the parallel subunit to the diode 4; K65: a switch 65, connects the diode 4 to the cable 4; K66: a switch 66, connects the negative electrode of the last battery pack in the parallel subunit to the cable 45;

K86: a switch 86, a single-pole double-throw switch, disconnects the bypass cable 3 from the load interface 8; K52: a switch 52, which is turned off when the battery packs are being charged; K54: a switch 54, a single-pole double-throw switch, which is turned off when the battery packs are being charged; K55: a switch 55, a single-pole double-throw switch, which is turned off when the battery packs are being charged;

DX4: a ground wire 4; and DX5: a ground wire 5.

FIG 4-2-2 schematically shows the circuit in FIG 4-2-1, in which a part of the second battery pack unit forms a parallel subunit to supply power to a load after the charging on the buck side is completed.
In the drawing:

GYJK3: a high-voltage interface 3; K83: a switch 83, disconnects the cable 3 from the high-voltage interface 3; DL3: a cable 3 for connecting the high-voltage interface to the positive electrode of the battery pack; DL34: a cable 34 for connecting the single battery pack subunit to the parallel subunit (as shown in the dotted box); DL4: a cable 4 for connecting the positive electrodes of the adjacent battery packs in the parallel subunit; DL45: a cable 45 for connecting the parallel subunit to the following battery pack; PLDL3: a bypass cable 3, where one end of the PLDL3 is connected to the DL34, the other end of the PLDL3 is connected to the switch K21 through the switch K86; PLDL4: a bypass cable 4, one end of the PLDL4 is connected to DL4, and the other end of the PLDL4 is connected to the switch K22; K86: a switch 86, connects the bypass cable 3 to the load interface 8;

FZJK7: a load interface 7; FZJK8: a load interface 8. EJ1: a diode 1; EJ3: a diode 3; EJ4: a diode 4;

K20: a switch 20, connected to the load interface 7; K61: a switch 61, connects the diode 1 to the cable 3 (or disconnects the diode 1 from the cable 3); K62: a switch 62, connects the negative electrode of the battery pack to the ground wire 4;

K21: a switch 21, connects the positive electrode of the first battery pack in the parallel subunit to the diode 3. K63: a switch 63, connects the diode 3 at the positive electrode of the first battery pack in parallel subunit to the cable 34 (or disconnects the diode 3 at the positive electrode of the first battery pack in parallel subunit from the cable 34): K64: a switch 64, connects the negative electrode of the first battery pack in the parallel subunit to the ground wire 5.

K22: a switch 22, a single-pole double-throw switch, connects the positive electrode of the last battery pack in the parallel subunit to the diode 4; K65: a switch 65, connects the diode 4 to the cable 4; K66: a switch 66, connects the negative electrode of the last battery pack in the parallel subunit to the cable 45;

K86: a switch 86, a single-pole double-throw switch, connects the bypass cable 3 to the load interface 8; K52: a switch 52, which is turned off when the battery packs are being charged; K54: a switch 54, connected to the positive electrodes of the adjacent battery packs when the battery packs are being charged; K55: a switch 55, a single-pole double-throw switch, which is turned off when the battery packs are being charged; DX4: a ground wire 4; and DX5: a ground wire 5.

FIG 4-3-1 schematically shows a circuit according to an arrangement of the present disclosure, in which the second battery pack unit in the at least one buck station adopting the B-type battery pack is charging on the buck side.
In the drawing:

GYJK3: a high-voltage interface 3, connected to the high-voltage cable; K83: a switch 83, a single-pole double-throw switch, connects the cable 3 to the high-voltage interface 3; DL3: a cable 3 for connecting the high-voltage interface to the positive electrode of the battery pack; EJ1: a diode 1; EJ3: a diode 3; EJ4: a diode 4; K20: a switch 20, connects the positive electrode of the battery pack to the diode 1; K61: a switch 61, connects the diode 1 to the cable 3; K62: a switch 62, connects the negative electrode of the battery pack to the cable 34; DL35: a cable 35 for connecting the single battery pack subunit to the series subunit (as show in the dotted box); DLS: a cable 5 for connecting the battery packs in the series subunit; DL56: a cable 56 for connecting the last battery pack in the series subunit to the following battery pack; PLDL1: a bypass cable 1, connected to the cable 4;

FZJK7: load interface 7; FZJK9: load interface 9. EJ1: Diode 1; EJ5: Diode 5; EJ6: Diode 6.

K23: a switch 23, a single-pole double-throw switch, connected to the diode 1; K61: a switch 61, a single-pole double-throw switch, connects the diode 1 to the cable 3, and the cable 3 is connected to high-voltage interface 3 through the switch 83; K62: a switch 62, a double-pole double-throw switch, connect the negative electrode of the battery pack to the cable 35.

K25: a switch 25, a single-pole double-throw switch, connects the positive electrode of the first battery pack in the series subunit to the diode 5. K67: a switch 67, a single-pole double-throw switch, connects the diode 5 to the cable 35, and the cable 35 is connected to the negative electrode of the front battery pack; K68: a switch 68, a double-pole double-throw switch, connects the negative electrode of the first battery pack in the series subunit to the cable 5, and then the cable 5 is connected to the positive electrode of the next battery pack, so that the battery packs are connected in series.

K26: a switch 26, a single-pole double-throw switch, connect the positive electrode of the last battery pack in the series subunit to the diode 6; K67a: a switch 67a, a single-pole double-throw switch, connects the diode 6 to the cable 5, and the cable 5 is connected to the negative electrode of the previous battery pack; K68a: a switch 68a, a double-pole double-throw switch, connects the negative electrode of the battery pack to the cable 5.

K68b: a switch 68b, a double-pole double-throw switch, connects the negative electrode of the last battery pack in series subunit to the cable 56.

K52: a switch 52, a single-pole double-throw switch, which is turned off when the battery packs are being charged; K53: a switch 53, a single-pole double-throw switch, which is turned off when the battery packs are being charged.
n: the number of the battery packs;
DX4: a ground wire 4; and DX5: a ground wire 5.

FIG 4-3-2 schematically shows the circuit in FIG 4-3-1, in which a part of the second battery pack unit forms a series subunit to supply power to a load after the charging on the buck side is completed.
In the drawing:

GYJK3: a high-voltage interface 3; K83: a switch 83, disconnects the cable 3 from the high-voltage interface 3(or connects the cable 3 to the high-voltage interface 3); DL3: a cable 3; DL35: a cable 35 for connecting the single battery pack subunit to the series subunit (as shown in the dotted box); DL5: a cable 5 for connecting adjacent battery packs; PLDL1: a bypass cable 1, connected to the cable 5;

FZJK7: load interface 7; FZJK9: load interface 9. EJ1: Diode 1; EJ5: Diode 5; EJ6: Diode 6;

K23: a switch 23, connected to the load interface 7; K61: a switch 61, connects the diode 1 to the cable 3 (or disconnects the diode 1 from the cable 3); K62: a switch 62, connects the negative electrode of the battery pack to the ground wire; DL3: a cable 3; DL35: a cable 35 for connecting the single battery pack subunit to the series subunit (as show in the dotted box); DL5: a cable 5 for connecting the adjacent battery packs in the series subunit; PLDL1: a bypass cable 1, connected to the cable 5;

FZJK7: a load interface 7; FZJK9: a load interface 9. EJ1: a diode 1; EJ5: a diode 5; EJ6: a diode 6;

K23: a switch 23; K61: a switch 61, connects the diode 1 to the cable 3 (disconnects the diode 1 from the cable 3); K62: a switch 62, connect the negative electrode of the battery pack to the cable 35.

K25: a switch 25, connects the positive electrode of the first battery pack in the series subunit to the load interface 9. K67: a switch 67, connects the diode 5 to the cable 35 (or disconnects the diode 5 from the cable 35); K68: a switch 68, connects the negative electrode of the first battery pack in the series subunit to the cable 5.

K26: a switch 26, connect the positive electrode of the last battery pack in the series subunit to the diode 6; K67a: a switch 67a, connects the diode 6 to the cable 5 (or disconnects the diode 6 from the cable 5); K68a: a switch 68a, connects the negative electrode of the battery pack to the cable 5.

K68b: a switch 68b, a double-pole double-throw switch, connects the negative electrode of the last battery pack in series subunit to the cable 56.

n: the number of the battery packs;

DX4: a ground wire 4; and DX5: a ground wire 5; K52: a switch 52, which is turned off when the battery packs are being charged; K53: a switch 53, which is turned off when the battery packs are being charged.

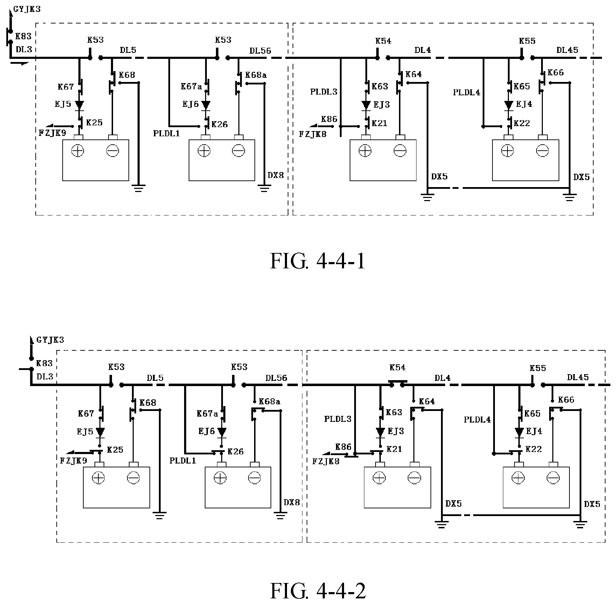

FIG 4-4-1 schematically shows a circuit according to an arrangement of the present disclosure, in which the second battery pack unit in the at least one buck station adopting the B-type battery pack is charging on the buck side.

In the drawing:

GYJK3: a high-voltage interface 3, connected to the high-voltage cable. K83: a switch 83, connects the cable 3 to the high voltage interface 3;

in the series subunit (as shown in the first dotted box):

FZJK9: a load interface 9; PLDL1: a bypass cable 1, connected to the cable 5; DL3: a cable 3 for connecting the high-voltage interface to the positive electrode of the battery pack; DL5: a cable 5 for connecting the battery packs in the series subunit; DL56: a cable 56 for connecting the series subunit to the parallel subunit;

K25: a switch 25, connects the positive electrode of the first battery pack in the series subunit to the diode 5. K67: a switch 67, connects the diode 5 to the cable 3; K68: a switch 68, connects the negative electrode of the first battery pack in the series subunit to the cable 5;

K26: a switch 26, connects the positive electrode of the last battery pack in the series subunit to the diode 6; K67a: a switch 67a, connect the diode 6 to the cable 5; K68a: a switch 68a, connects the negative electrode of the last battery pack in the series subunit to the cable 56;

K53: a switch 53, which is turned off when the battery packs are being charged; DX8: a ground wire 8;

in the parallel subunit (as shown in the second dotted box):

FZJK8: a load interface 8. PLDL3: a bypass cable 3, connected to the cable 56; PLDL4: a bypass cable 4, connected to the cable 4; DL4: a cable 4 for connecting the battery packs in the parallel subunit; DL45: a cable 45 for connecting the parallel subunit to the following battery pack;

K21: a switch 21, a single-pole double-throw switch, connects the positive electrode of the first battery pack in the parallel subunit to the diode 3. K63: a switch 63, a single-pole double-throw switch, connects the diode 3 at the positive electrode of the first battery pack in the parallel subunit to the cable 56; K64: a switch 64, a double-pole double-throw, connect the negative electrode of the first battery pack in the parallel subunit to the cable 4; K86: a switch 86, a single-pole double-throw switch, disconnect the bypass cable 3 from the load interface 8;

K22: a switch 22, a single-pole double-throw switch, connects the positive electrode of the last battery pack in the parallel subunit to the diode 4; K65: a switch 65, connects the diode 4 to the cable 4; K66: a switch 66, connects the negative pole of the last battery pack in the parallel subunit to the cable 45;

K54: a switch 54, which is turned off when the battery packs are being charged; K55: a switch 55, which is turned off when the battery packs are being charged; and DX5: a ground wire 5.

FIG 4-4-2 schematically shows the circuit in FIG 4-4-1, in which the second battery pack unit forms a series subunit and a parallel subunit to supply power to their respective load after the charging on the buck side is completed.
In the drawing:

GYJK3: a high-voltage interface 3, connected to the high-voltage cable; K83: a switch 83, connects the cable 3 to the high voltage interface 3; DL3: a cable 3 for connecting the high-voltage interface to the positive electrode of the battery pack.
in the series subunit (as shown in the first dotted box):

FZJK9: a load interface 9; PLDL1: a bypass cable 1; DL5: a cable 5 for connecting the battery packs in the series subunit; DL56: a cable 56 for connecting the series subunit to the parallel subunit;
K25: a switch 25, connects the positive electrode of the first battery pack in the series subunit to the load interface 9. K67: a switch 67, connects the diode 5 to the cable 3 (or disconnects the diode 5 from the cable 3); K68: a switch 68, connects the negative electrode of the first battery pack in the series subunit to the cable 5;
K26: a switch 26, connects the positive electrode of the last battery pack in the series subunit to the bypass cable 1; K67a: a switch 67a, connect the diode 6 to the cable 5 (or disconnect the diode 6 from the cable 5); K68a: a switch 68a, connects the negative electrode of the last battery pack in the series subunit to the cable 56; K53: a switch 53, which is turned off when the battery packs are being charged; DX8: a ground wire 8;
in the parallel subunit (as shown in the second dotted box):

FZJK8: a load interface 8. PLDL3: a bypass cable 3, connected to the cable 56; PLDL4: a bypass cable 4, connected to the cable 4; DL4: a cable 4 for connecting the battery packs in the parallel subunit;
K21: a switch 21, connects the positive electrode of the first battery pack in the parallel subunit to the bypass cable 3; K86: a switch 86, connects the bypass cable 3 to the load interface 8; K63: a switch 63, connects the diode 3 at the positive electrode of the first battery pack in the parallel subunit to the cable 56 (or disconnects the diode 3 at the positive electrode of the first battery pack in the parallel subunit from the cable 56); K64: a switch 64, connect the negative electrode of the first battery pack in the parallel subunit to the ground wire 5;
K22: a switch 22, connects the positive electrode of the last battery pack in the parallel subunit to the diode 4; K65: a switch 65, connects the diode 4 to the cable 4 (or disconnects the diode 4 from the cable 4); K66: a switch 66, connects the negative pole of the last battery pack in the parallel subunit to the ground wire 5;
K54: a switch 54, connected to adjacent battery packs when the battery packs are being charged; K55: a switch 55, which is turned off when the battery packs are being charged; and DX5: a ground wire 5.

FIG 5-1-1 schematically shows a circuit according to an arrangement of the present disclosure, in which the second battery pack unit in the at least one buck station adopting the C-type battery pack is charging on the buck side;
In the drawing:

GYJK4: a high-voltage interface 4, connected to the high-voltage cable. K84: a switch 84, a single-pole double-throw switch, connects the cable 7 to the high-voltage interface. DL7: a cable 7 for connecting the switch 84 to the positive electrode of the battery pack; DL6: a cable 6 for connecting adjacent battery packs; DL67: a cable 67, on standby;
FZJK11: a load interface 11; FZJK13: a load interface 13; EJ11: a diode 11; EJ12: a diode 12; K30: a switch 30, a single-pole double-throw switch, connects the negative electrode of the battery pack to the diode 11; K31: a switch 31, a single-pole double-throw switch, connects the negative electrode of the battery pack to the ground wire 6; K71: a switch 71, a double-pole double-throw switch, connect the positive electrode of the battery pack to the cable 7; K72: a switch 72, a single-pole double-throw switch, connects the diode 11 at the negative electrode of the battery pack to the cable 6; K75: a switch 75, a double-pole double-throw switch, connect the positive electrode of the battery pack to the cable 6; K76: a switch 76, connect the diode 12 at the negative electrode of the last battery pack to the cable 67;
K57: a switch 57, a single-pole double-throw switch, which is turned off when the battery packs are being charged; and DX6: a ground wire 6.

FIG 5-1-2 schematically shows the circuit in FIG 5-1-1, where the second battery pack unit in the at least one buck station adopting the C-type battery pack forms a plurality of single battery pack subunits to supply power to their respective loads after the charging on the buck side is completed.
In the drawing:

GYJK4: a high-voltage interface 4, connected to the high-voltage cable. K84: a switch 84, connects the cable 7 to the high-voltage interface 4. DL7: a cable 7 for connecting the switch 84 to the positive electrode of the battery pack; DL6: a cable 6 for connecting adjacent battery packs; DL67: a cable 67, on standby;
FZJK11: a load interface 11; FZJK13: a load interface 13; EJ11: a diode 11; EJ12: a diode 12;
K30: a switch 30, connects the negative electrode of the battery pack to the ground wire; K31: a switch 31, connects the negative electrode of the battery pack to the ground wire 6;
K71: a switch 71, connect the positive electrode of the battery pack to the cable 7; K72: a switch 72, connects the diode 11 at the negative electrode of the battery pack to the cable 6 (or disconnects the diode 11 at the negative electrode of the battery pack from the cable 6); K75: a switch 75, connect the positive electrode of the battery pack to the load interface 13; K76: a switch 76, connect the negative electrode of the last battery pack to the cable 67 (or disconnect the negative electrode of the last battery pack from the cable 67);
K57: a switch 57, which is turned off when the battery packs are being charged; and DX6: a ground wire 6.

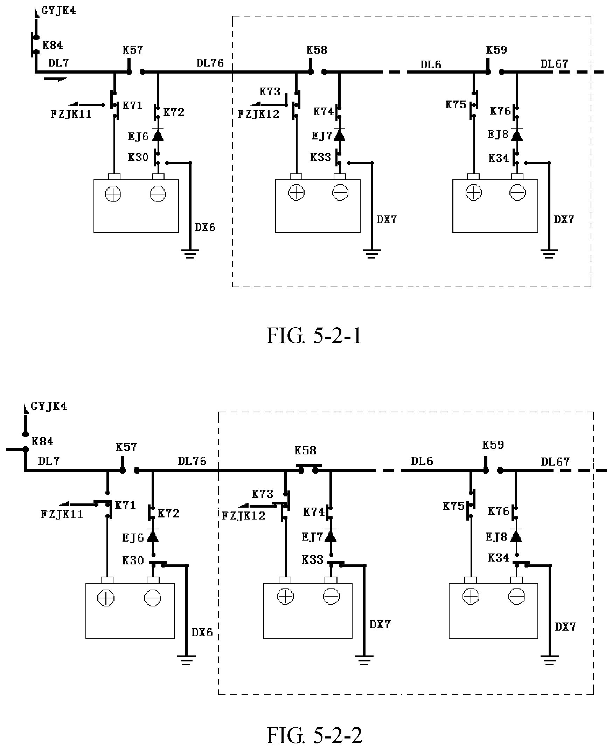

FIG 5-2-1 schematically shows a circuit according to an arrangement of the present disclosure, in which the second battery pack unit in the at least one buck station adopting the C-type battery pack is charging on the buck side.
In the drawing:

GYJK4: a high-voltage interface 4, connected to the high-voltage cable. K84: a switch 84, connects the cable 7 to the high-voltage interface. DL7: a cable 7 for connecting the switch 84 to the positive electrode of the battery pack; DL76: a cable 76 for connecting the single battery pack subunit to the following parallel subunit; DL6: a cable 6 for connecting adjacent battery packs in the parallel subunit; DL67: a cable 67 for connecting the last battery pack in the parallel subunit to the following battery pack;
FZJK11: a load interface 11; FZJK12: a load interface 12; EJ11: a diode 11; EJ12: a diode 12;
K30: a switch 30, a single-pole double-throw switch, connects the negative electrode of the battery pack to the diode 6; K33: a switch 33, a single-pole double-throw switch, connects the negative electrode of the battery pack to the diode 7; K34: a switch 34, a single-pole double-throw switch, connects the negative electrode of the battery pack to the diode 8; K71: a switch 71, connect the positive electrode of the battery pack to the cable 7; K72: a switch 72, connects the diode 6 at the negative electrode of the battery pack to the cable 76; K73: a switch 73, a double-pole double-throw switch, connect the positive electrode of the battery pack to cable 76; K74: a switch 74, a single-pole double-throw switch, connect the diode 7 at the negative electrode of the battery pack to the cable 6; K75: a switch 75, a double-pole double-throw switch, connect the positive electrode of the battery pack to the cable 6; K76: a switch 76, connect the diode 8 at the negative electrode of the last battery pack to the cable 67;
K57: a switch 57, a single-pole double-throw switch, which is turned off when the battery packs are being charged; K58: a switch 58, a single-pole double-throw switch, which is turned off when the battery packs are being charged; K59: a switch 59, a single-pole double-throw switch, which is turned off when the battery packs are being charged; DX6: a ground wire 6; and DX7: a ground wire 7.
FIG 5-2-2 schematically shows the circuit in FIG 5-2-1, in which the second battery pack unit forms a single battery pack subunit and a parallel subunit to supply power to their respective loads after the charging on the buck side is completed.
In the drawing:

GYJK4: a high-voltage interface 4; K84: a switch 84, disconnects the cable 7 to the high-voltage interface. DL7: a cable 7 for connecting the switch 84 to the positive electrode of the battery pack; DL76: a cable 76 for connecting the single battery pack subunit to the following parallel subunit; DL6: a cable 6 for connecting adjacent battery packs in the parallel subunit; DL67: a cable 67 for connecting the last battery pack in the parallel subunit to the following battery pack;
FZJK11: a load interface 11; FZJK12: a load interface 12; EJ11: a diode 11; EJ12: a diode 12;
K30: a switch 30, connects the negative electrode of the battery pack to the ground wire 6; K33: a switch 33, connects the negative electrode of the battery pack to the ground wire 6; K71: a switch 71, connect the positive electrode of the battery pack to the load interface 11; K72: a switch 72, connects the diode 11 to the cable 76 (or disconnects the diode 11 from the cable 76); K75: a switch 75, connect the positive electrode of the battery pack to the load interface 13; K76: a switch 76, connect the negative electrode of the last battery pack to the cable 67 (or disconnect the negative electrode of the last battery pack from the cable 67); K57: a switch 57, which is turned off when the battery packs are being charged; K58: and DX6: a ground wire 6.

FIG 5-3-1 schematically shows a circuit according to an arrangement of the present disclosure, in which the second battery pack unit in the at least one buck station adopting the C-type battery pack is charging on the buck side.
In the drawing:

GYJK4: a high-voltage interface 4, connected to the high-voltage cable. K84: a switch 84, connects the cable 7 to the high-voltage interface 4. DL7: a cable 7 for connecting the switch 84 to the positive electrode of the battery pack; DL78: a cable 78 for connecting the single battery pack subunit to the following series subunit; DL8: a cable 8 for connecting adjacent battery packs in the series subunit; DL89: a cable 89 for connecting the last battery pack in the parallel subunit to the following battery pack; PLDL2: a bypass cable 2, connected to the cable 8;
FZJK11: a load interface 11; FZJK13: a load interface 13; EJ6: a diode 6; EJ9: a diode 9; EJ10: a diode 10;
K30: a switch 30, a single-pole double-throw switch, connects the negative electrode of the battery pack to the diode 6; K35: a switch 35, a single-pole double-throw switch, connects the negative electrode of the battery pack to the diode 9; K36: a switch 36, a single-pole double-throw switch, connects the negative electrode of the last battery pack in the series subunit to the diode 8; K71: a switch 71, a single-pole double-throw switch, connect the positive electrode of the battery pack to the cable 7; K72: a switch 72, a single-pole double-throw switch, connects the diode 6 at the negative electrode of the battery pack to the cable 78; K73a: a switch 73a, a double-pole double-throw switch, connect the positive electrode of the first battery pack in the series subunit to cable 78; K74a: a switch 74a, a single-pole double-throw switch, connect the diode 9 at the negative electrode of the first battery pack in the series subunit to the cable 8; K73b: a switch 73b, a double-pole double-throw switch, connect the positive electrode of the battery pack to the cable 8; K75a: a switch 75a, a double-pole double-throw switch, connect the positive electrode of the last battery pack in the series subunit to the cable 8; K76: a switch 76, a single-pole double-throw switch, connect the diode 10 at the negative electrode of the last battery pack in the series subunit to the cable 89;
K57: a switch 57, which is turned off when the battery packs are being charged; K58a: a switch 58a, which is turned off when the battery packs are being charged; K59a: a switch 59, which is turned off when the battery packs are being charged;
n: the number of the battery packs;
DX6: a ground wire 6; and DX7: a ground wire 7.

FIG 5-3-2 schematically shows the circuit in FIG 5-3-1, in which the second battery pack unit forms a single battery pack subunit and a series subunit to supply power to their respective loads after the charging on the buck side is completed.
In the drawing:

GYJK4: a high-voltage interface 4; K84: a switch 84, disconnects the cable 7 from the high-voltage interface 4. DL7: a cable 7; DL78: a cable 78 for connecting the single battery pack subunit to the following series subunit; DL8: a cable 8 for connecting adjacent battery packs in the series subunit; DL89: a cable 89 for connecting the last battery pack in the parallel subunit to the following battery pack; PLDL2: a bypass cable 2, connected to the cable 8;
FZJK11: a load interface 11; FZJK13: a load interface 13; EJ6: a diode 6; EJ9: a diode 9; EJ10: a diode 10;
K30: a switch 30, connects the negative electrode of the battery pack to the diode 6; K35: a switch 35, connects the negative electrode of the first battery pack in the series subunit to the bypass cable 2; K36: a switch 36, connects the negative electrode of the last battery pack in the series subunit to the ground wire 7; K71: a switch 71, connect the positive electrode of the battery pack to the load interface 11; K72: a switch 72, connects the diode 6 at the negative electrode of the battery pack to the cable 78 (or disconnects the diode 6 at the negative electrode of the battery pack from the cable 78); K73a: a switch 73a, connect the positive electrode of the first battery pack in the series subunit to load interface 13; K74a: a switch 74a, connect the diode 9 at the negative electrode of the first battery pack in the series subunit to the cable 8 (or disconnect the diode 9 at the negative electrode of the first battery pack in the series subunit from the cable 8); K73b: a switch 73b, connect the positive electrode of the battery pack to the cable 8; K75a: a switch 75a, connect the positive electrode of the last battery pack in the series subunit to the cable 8; K76: a switch 76, connects the diode 9 at the negative electrode of the last battery pack in the series subunit to the cable 89 (or disconnects the diode 9 at the negative electrode of the last battery pack in the series subunit to the cable 89);
K57: a switch 57, which is turned off when the battery packs are being charged; K58a: a switch 58a, which is turned off when the battery packs are being charged; K59a: a switch 59, which is turned off when the battery packs are being charged;
n: the number of the battery packs;
DX6: a ground wire 6; and DX7: a ground wire 7.

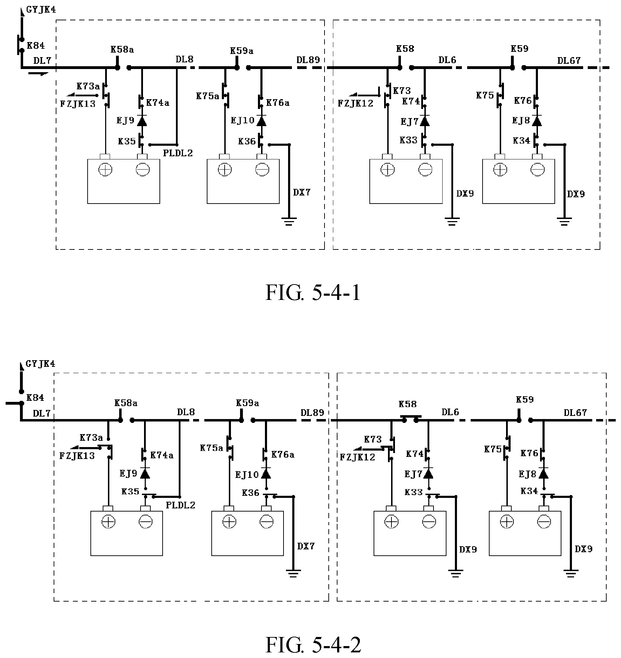

FIG 5-4-1 schematically shows a circuit according to an arrangement of the present disclosure, in which the second battery pack unit in the at least one buck station adopting the C-type battery pack is charging on the buck side.
In the drawing:

GYJK4: a high voltage interface 4, connected to the high-voltage cable; K84: a switch 84, connects the cable 7 to the high-voltage interface 4; DL7: a cable 7 for connecting the switch 84 to the negative electrode of battery pack in the series subunit;
in the series subunit (as shown in the first dotted box):

DL8: a cable 8 for connecting the battery packs in the series subunit; DL89: a cable 89 for connecting the series to the parallel subunit; PLDL2: a bypass cable 2, connected to the cable 8;
FZJK13: a load interface 13; EJ9: a diode 9; EJ10: a diode 10;
K35: a switch 35, a single-pole double-throw switch, connect the negative electrode of the first battery pack in the series subunit to the diode 9; K36: a switch 36, a single-pole double-throw switch, connect the negative electrode of the last battery pack in the series subunit to the diode 10; K73a: a switch 73a, a double-pole double-throw switch, connect the positive electrode of the first battery pack in the series subunit to the cable 7; K74a: a switch 74a, a single-pole double-throw switch, connects the diode 9 at the negative electrode of the first battery pack in the series subunit to the cable 8; K75a: a switch 75a, a double-pole double-throw switch, connects the positive electrode of the last battery pack in the series subunit to the cable 8; K76a: a switch 76a, a single-pole double-throw switch, connect the diode 10 at the negative electrode of the last battery pack in the series subunit to the cable 89;
K58a: a switch 58a, which is turned off when the battery packs are being charged; K59a: a switch 59a, which is turned off when the battery packs are being charged; DX7: a ground wire 7;
in the parallel subunit (as shown in the second dotted box):

DL6: a cable for connecting the battery packs in the parallel subunit; DL67: a cable 67 for connecting the parallel subunit to the following battery pack; FZJK12: a load interface 12; EJ7: a diode 7; EJ8: a diode 8;
K33: switch 33, a single-pole double-throw switch, connects the negative electrode of the battery pack to the diode 7; K34: a switch 34, a single-pole double-throw switch, connects the negative electrode of the battery pack to the diode 8; K73: a switch 73, a three-pole three-throw switch, connect the positive electrode of the battery pack to the cable 89; K74: a switch 74, a single-pole double-throw switch, connect the diode 7 at the negative electrode of the battery pack to the cable 6; K75: a switch 75, a double-pole double-throw switch, connect the positive electrode of the battery pack to the cable 6; K76: a switch 76, a single-pole double-throw switch, connect the diode 8 at the negative electrode of the last battery pack in the parallel subunit to the cable 67.
K58: a switch 58, a single-pole double-throw switch, which is turned off when the battery packs are being charged; K59: a switch 59, a single-pole double-throw switch, which is turned off when the battery packs are being charged; and DX9: a ground wire 9.

FIG 5-4-2 schematically shows the circuit in FIG 5-4-1, in which the second battery pack unit forms a parallel subunit and a series subunit to supply power to their respective loads after the charging on the buck side is completed.
In the drawing:

GYJK4: a high voltage interface 4; K84: a switch 84, disconnects the cable 7 from the high-voltage interface 4; DL7: a cable 7;

in the series subunit (as shown in the first dotted box):

DL8: a cable 8 for connecting the battery packs in the series subunit; DL89: a cable 89 for connecting the series to the parallel subunit; PLDL2: a bypass cable 2, connected to the cable 8;

FZJK13: a load interface 13; EJ9: a diode 9; EJ10: a diode 10;

K35: a switch 35, connect the negative electrode of the first battery pack in the series subunit to the bypass cable; K36: a switch 36, connect the negative electrode of the last battery pack in the series subunit to the ground wire 7; K73a: a switch 73a, a double-pole double-throw switch, connect the positive electrode of the first battery pack in the series subunit to the load interface 13; K74a: a switch 74a, connects the diode 9 at the negative electrode of the first battery pack in the series subunit to the cable 8 (or disconnects the diode 9 at the negative electrode of the first battery pack in the series subunit from the cable 8); K75a: a switch 75a, connects the positive electrode of the last battery pack in the series subunit to the cable 8; K76a: a switch 76a, connect the diode 10 at the negative electrode of the last battery pack in the series subunit to the cable 89 (or disconnect the diode 10 at the negative electrode of the last battery pack in the series subunit from the cable 89);

K58a: a switch 58a, which is turned off when the battery packs are being charged; K59a: a switch 59a, which is turned off when the battery packs are being charged; DX7: a ground wire 7;

in the parallel subunit (as shown in the second dotted box):

DL6: a cable for connecting the battery packs in the parallel subunit; DL67: a cable 67 for connecting the parallel subunit to the following battery pack;

FZJK12: a load interface 12; EJ7: a diode 7; EJ8: a diode 8;

K33: switch 33, connects the negative electrode of the battery pack to the ground wire 9; K34: a switch 34, connects the negative electrode of the battery pack to the ground wire 9; K73: a switch 73, connect the positive electrode of the battery pack to the load interface 12; K74: a switch 74, connect the diode 7 at the negative electrode of the battery pack to the cable 6 (or disconnect the diode 7 at the negative electrode of the battery pack from the cable 6); K75: a switch 75, connect the positive electrode of the battery pack to the cable 6; K76: a switch 76, connect the diode 8 at the negative electrode of the last battery pack in the parallel subunit to the cable 67 (or disconnect the diode 8 at the negative electrode of the last battery pack in the parallel subunit from the cable 67);

K58: a switch 58, which is turned off when the battery packs are being charged; K59: a switch 59, which is turned off when the battery packs are being charged; and DX9: a ground wire 9.

FIGS. 6-1-A, 6-1-B, 6-1-C and 6-1-D schematically show an entire disconnection process of the B-type battery packs in the buck station according to an arrangement of the present disclosure, in which:

FIG 6-1-A schematically shows a charging state of the B-type battery pack in the buck station, where

DL4: a cable 4 for connecting the battery packs in the buck station; XDCZ01: a first battery pack 01, a sample that demonstrates the disconnection process of the B-type battery pack;

K20: a switch 20, connects the positive electrode of the first battery pack 01 to the diode 1; K52: a switch 52, which is turned off when the battery pack is being charged; K61: a switch 61, connect the cable 4 to the diode 1 at the positive electrode of the battery pack 01; K62: a switch 62, connect the negative electrode of the battery 01 to the cable 4;

FZJK7: a load interface 7; DX4: a ground wire 4.

FIG 6-1-B schematically shows a first step of the disconnection process of the battery pack 01 in the buck station, where

K52: a switch 52, when it is turned on, the battery pack 01 stops being charged, other battery packs are still being charged; the switch 20, the switch 61 and the switch 62 are all kept on;

FZJK7: a load interface 7; and DX4: a ground wire 4.

FIG 6-1-C schematically shows a first disconnection state of the battery pack 01 in the buck station, where the battery pack can be moved away from the original location.
In the drawing:

K52: a switch 52, which it turned on, so that other battery packs are still being charged; K20: a switch 20, which is kept on to connect the positive electrode of the battery pack 01 to the diode, and disconnect the positive electrode of the battery pack 01 from the load interface 7; K61: a switch 61, disconnect the positive electrode of the battery pack from the cable 4; K62: a switch 62, disconnect the negative electrode of the battery pack from the cable 4 and the ground wire 4;
FZJK7: a load interface 7; and DX4: a ground wire 4.

FIG 6-1-D schematically shows a first disconnection state of the battery pack 01 in the buck station, where the battery pack form a DC power supply to supply power to the load.
In the drawing:

K52: a switch 52, which it turned on, so that other battery packs are still being charged; K20: a switch 20, connect the positive electrode of the battery pack to the load interface; K61: a switch 61, disconnect the positive electrode of the battery pack from the cable 4; K62: a switch 62, disconnect the negative electrode of the battery pack from the cable 4 and the ground wire 4;
DX4: a ground wire 4;
when the negative electrode of the front battery pack is grounded, the last battery pack in the second battery pack unit is disconnected.

FIGS. 6-2-A, 6-2-B, 6-2-C and 6-2-D schematically show an entire disconnection process of the C-type battery packs in the buck station according to an arrangement of the present disclosure, in which:

FIG 6-2-A schematically shows a charging state of the C-type battery pack in the buck station, where

DL5: a cable 5 for connecting the battery packs in the buck station; XDCZ02: a first battery pack 02, a sample that demonstrates the disconnection process of the C-type battery pack;
K30: a switch 30, connects the positive electrode of the first battery pack 02 to the diode 11; K57: a switch 57, which is turned off when the battery pack is being charged; K71: a switch 71, connect the cable 5 to the positive electrode of the battery pack 02; K72: a switch 72, connect the diode 11 at the negative electrode of the battery 02 to the cable 5;
FZJK11: a load interface 11; DX6: a ground wire 6.

FIG 6-1-B schematically shows a first step of the disconnection process of the battery pack 02 in the buck station, where

K57: a switch 57, when it is turned on, the battery pack 02 stops being charged, other battery packs are still being charged; the switch 71, the switch 30 and the switch 72 are all kept on;
FZJK11: a load interface 11; and DX6: a ground wire 6.

FIG 6-2-C schematically shows a first disconnection state of the battery pack 02 in the buck station, where the battery pack can be moved away from the original location.
In the drawing:

K57: a switch 57, which it turned on, so that other battery packs are still being charged; K30: a switch 30, which is kept on to connect the positive electrode of the battery pack 01 to the diode, and disconnect the positive electrode of the battery pack 01 from the ground wire 6; K71: a switch 71, disconnect the positive electrode of the battery pack from the cable 5; K72: a switch 72, disconnect the negative electrode of the battery pack from the cable 5;
FZJK11: a load interface 11; and DX6: a ground wire 6.

FIG 6-2-D schematically shows a first disconnection state of the battery pack 02 in the buck station, where the battery pack form a DC power supply to supply power to the load.
In the drawing:

K57: a switch 57, which it turned on, so that other battery packs are still being charged; K30: a switch 30, disconnect the positive electrode of the battery pack from the diode 11, and connect the positive electrode of the battery pack to the ground wire 6; K71: a switch 71, disconnect the positive electrode of the battery pack from the cable 5, and connect the positive electrode of the battery pack to the load interface 11; K72: a switch 72, disconnect the negative electrode of the battery pack from the cable 5;

FZJK11: a load interface 11; DX6: a ground wire 6;

when the negative electrode of the front battery pack is grounded, the last battery pack in the second battery pack unit is disconnected from the series stack.

FIG 7-1 schematically show a circuit of a full DC high voltage transmission and distribution power grid in a working state according to an arrangement of the present disclosure.
In the drawing:

GYDW: a high-voltage power grid;

CDCLD1: a first series stack 1 in the first battery pack unit, consisting of A-type ordinary type battery packs, where the fully charged battery packs in the drawing are filled with gray to distinguish; the CDCLD1 is connected to the high-voltage power grid through the diode to supply power; the cable in dashed line in the drawing intends to show the cable in a simplified and illustrative manner; ZLJK1: a DC interface 1, which is provided for the first series stack 122-1;

CDCLD2: a second series stack 2 of the first battery pack unit, which is composed of the A-type battery pack, where the fully charged battery packs in the drawing are filled with gray to distinguish; the CDCLD2 is connected to the high-voltage power grid through the diode to supply power; the second series stack 2 in the first battery pack unit is composed of a plurality of series sub-stacks, including CDCLD2a, CDCLD2b, and CDCLD2c, where the series sub-stacks may not be arranged in the same place, and there is a certain distance from each other; the cable in dashed line in the drawing intends to show the cable in a simplified and illustrative manner, in which

CDCLD2a: a first charging series sub-stack 2a; CDCLD2b: a second charging series sub-stack 2b; CDCLD2c: a third charging series sub-stack 2c;

ZLJK2a: a DC interface 2a, provided for the CDCLD2a; ZLJK2b: a DC interface 2b, provided for the CDCLD2b; ZLJK2c: a DC interface 2c, provided for the CDCLD2c;

CDCLD3: a third series stack 3 in the first battery pack, consisting of A-type battery packs, where the fully charged battery packs in the drawing are filled with gray to distinguish; the CDCLD2 is connected to the high-voltage power grid through the diode to supply power; the cable in dashed line in the drawing intends to show the cable in a simplified and illustrative manner; ZLJK3: a DC interface 3, provided for the third series stack 3 in the first battery pack unit.

BCDXDCZ1: a first series stack 1 to be charged, consisting of B-type or C-type battery packs. The battery packs without fill color in the drawing are being charged. After the BCDXDCZ1 is fully charged, the connection mode of the battery packs can be changed to form a single battery pack subunit, a parallel subunit and a series subunit. The cable in dashed line in the drawing intends to show the cable in a simplified and illustrative manner; and the single battery pack subunit, the parallel subunit or the series subunit can be omitted.

FZJK1a: a load interface 1a; FZJK1b: a load interface 1b; FZJK1c: a load interface 1c; where FZJK1a, FZJK1b and FZJK1c are respectively a load interface provided for the parallel combination of the battery packs to be charged or the series stack of the battery packs to be charged;

BCDXDCZ2: a second series stack 2 to be charged, which is composed of B-type or C-type battery packs. The battery packs without fill color in the drawing are being charged. The second series stack 2 are separated to form a single battery pack subunit, a parallel subunit and a series subunit, and respectively supply power to their corresponding loads. The cable in dashed line in the drawing intends to show the cable in a simplified and illustrative manner.

FZJK2a: a load interface 2a; FZJK2b: a load interface 2b; FZJK2c: a load interface 2c;

EJ: a diode that only allow current flow into the power grid, where the diode EJ is provided between the first battery pack unit (including CDCLD1, CDCLD2 and CDCLD3) consisting of A-type battery packs and the power grid;

YLJK: a reserved interface, configured to connect the other subunit of the second battery group unit that meets the technical indicators in the future to the power grid.

The three charging series stacks and the two series stacks to be charged are connected to the high-voltage power grid.
FIG 7-2 schematically show the circuit of the full DC high voltage transmission and distribution power grid in another working state according to the arrangement of the present disclosure.
In the drawing:

All the devices in FIG 7-2 are the same as those in FIG 7-1, but they are in different working state. That is, there is a charging series stack and a battery stack to be charged are disconnected from the high-voltage power grid.

CDCLD3: a third series stack 3 in the first battery pack, where the battery packs without fill color are disconnected from the high-voltage power grid and connected to the ZLJK3 for charging on the boost side.

BCDXDCZ2: a second series stack 2 to be charged, where the fully charged battery packs in the drawing are filled with gray to distinguish; after disconnected from the power grid, the BCDXDCZ2 forms a parallel subunit and a series subunit, so that the subunits are connected to their corresponding loads to supply power; FZJK2a: a load interface 2a, connected to the series subunit; FZJK2b: a load interface 2b, connected to the parallel subunit; and FZJK2c: a load interface 2c, connected to the single battery pack subunit.

## DETAILED DESCRIPTION OF EMBODIMENTS

The present disclosure will be further described in detail below with reference to the accompanying drawings and embodiments.

The full DC high voltage transmission and distribution power grid provided in the present disclosure has the following basic working principles:

(1) charging condition

The output voltage of the DC power supply in the primary side is $V_c$; each of the battery packs of the first battery pack unit in the boost station has the same specification, that is, each of the battery packs has the same nominal voltage, the same rated capacity and the same optimal charging current. A matching relationship between a nominal voltage $V_b$ and the actual voltage $V_c$ is:

$$V_b \approx V_c / 1.2;$$

The optimal charging current of each of the battery packs is $I_b$; the number of the battery packs in the first battery pack is n; $I_b$ and $I_c$ should preferably satisfy the following relationship:

$$I_c \approx n I_b$$

(2) Transmission condition

If the nominal voltage of the power grid is $V_w$, and all the battery packs form a first series stack and connected to the power grid for power transmission, the transmission condition should satisfy the following relationship:

$$V_w \approx n V_b;$$

then

$$n \approx V_w / V_b.$$

(3) Other restrictions on the battery pack strings to be charged

a. The sum of the nominal voltages of the battery pack strings to be charged $\times 1.2 \approx$ the sum of the nominal voltages of the charging series stack $\approx$ the grid voltage.
b. In a power grid with a boost station:
the sum of the optimal charging current of the battery pack strings to be charged $\leq$ the optimal charging current of the charging series stack.
c. In a power grid with a plurality of boost stations:
the sum of the optimal charging current of the battery pack string to be charged $\leq$ the sum of the optimal charging current of the charging series stack.
d. When the battery pack string to be charged is divided into a plurality of series subunits, a plurality of parallel subunits and a plurality of single battery subunits:

The series subunits with higher voltage should be placed at a high-voltage terminal closer to the power grid.

Described below are preferred embodiments in practical application, which may be not the best design for the actual case.

## Arrangement 1

In the arrangement, the DC power supply on the primary side adopts an isolated photovoltaic power plant, where the isolated photovoltaic power plant has a power of 2.4 MW, an output voltage of 480 V, and an output current of 5000 A.

In the boost station, the battery packs in the first battery pack unit are A-type battery packs with the same specification, where the nominal voltage of each of the battery packs $\approx 480$ V/1.2=400 V; the optimal charging current of each of the battery packs is 100 A; and the number of the battery packs is 50. Therefore, the sum of the optimal charging current of the first battery pack unit is equal to 5000 A. According to Fig. 2-2 and its description, each of the A-type battery packs in the first battery pack unit is connected in parallel, so that the DC power supply on the primary side charges the first battery pack unit at full capacity. After the charging on the boost side is completed, the connection mode of each of the A-type battery packs in the first battery pack unit is changed to a series connection with reference to Fig. 2-1 to form a first series stack, so that the first series stack connects to the power grid via the diode to transmit electricity power, where the transmission voltage is 50$\times$400 V=20 kV, and the transmission current is 100 A.

In the buck station, all battery packs in the second battery pack unit share the same specification, which can be any one of A-type battery packs, B-type battery packs, and C-type battery packs. The nominal voltage of each of the battery packs is 120 V; the optimal charging current of each of the battery packs is 99 A; and the optimal total charging voltage is 20 kV/1.2=16.67 kV. Therefore, the total number of the battery packs is 16.67 kV/0.12 kV≈139, and their total nominal voltage is 139×0.12 kV=16.68 kV. After the charging on the buck side is completed, the connection mode of each of the battery packs in the second battery pack unit is changed according to the user loads and the type of the battery pack. the second battery pack unit can be configured as follows.

(1) A series subunit with 50 battery packs, in which a voltage of the series subunit is 6 kV, and the series subunit can send power to remote users.
(2) A series subunit with 20 battery packs, in which a voltage of the series subunit is 2.4 kV, and the series subunit can send power to closer users.
(3) 69 single battery pack subunits, in which a voltage of each of the single battery pack subunit is 0.12 kV, and each of the single battery pack subunits is independently used as a load power supply for nearby users.

The accompanying drawings and descriptions of the connection modes of the battery packs are as follows:

Fig. 1-2A, Fig. 1-2C, Fig. 1-5, Fig. 1-6, Fig. 1-7;
Fig. 2-1, Fig. 2-2;
Fig. 3-2-1, Fig. 3-2-2, Fig. 3-2-3;
Fig. 4-2-1, Fig. 4-2-2, Fig. 4-3-1, Fig. 4-3-2, Fig. 4-4-1, Fig. 4-4-2;
Fig. 5-2-1, Fig. 5-2-2, Fig. 5-3-1, Fig. 5-3-2, Fig. 5-4-1, Fig. 5-4-2.

**Arrangement 2**

In the arrangement, the DC power supply on the primary side adopts an isolated photovoltaic power plant, where the isolated photovoltaic power plant has a power of 48 MW, an output voltage of 480 V, and an output current of 10000 A.

In the boost station, the battery packs in the first battery pack unit is A-type battery packs with the same specification, where the nominal voltage of each of the battery packs is ≈480 V/1.2=400 V; the optimal charging current of each of the battery packs is 600 A; and the number of the battery packs is 166. Therefore, the sum of the optimal charging current of the first battery pack unit is equal to 99600 A. After the charging on the boost side is completed, the connection mode of each of the A-type battery packs in the first battery pack unit is changed to a series connection, so that the first series stack connects to the power grid via the diode to transmit electricity power, where the transmission voltage is 166×400 V=66.4 kV, and the transmission current is 600 A.

There are four buck stations 140, including a buck station 140a, a buck station 140b, a buck station 140c and a buck station 140d, where the composition of the four buck stations is as follows.

In the buck station, all battery packs in the second battery pack unit share the same specification, which can be any one of A-type battery packs, B-type battery packs, and C-type battery packs. The nominal voltage of each of the battery packs is 120 V; the optimal charging current of each of the battery packs is 188 A; and the optimal total charging voltage is 66.4 kV/1.2=55.33 kV. Therefore, the total number of battery packs is 55.33kV/0.12 kV=461, and their total nominal voltage is 461×0.12 kV=66.32 kV. After the charging on the buck side is completed, the connection mode of each of the battery packs in the second battery pack unit is changed according to the user loads and the type of the battery pack. the second battery pack unit a can be configured as follows.

(1) Two subunits in series connection with 80 battery packs, in which a voltage of each of the two series subunits is 9.6 kV, and the two series subunits can send power to remote users.
(2) Three series subunits with 50 battery packs, in which a voltage of each of the three series subunits is 6 kV, and the three series subunits can send power to closer users.
(3) A series subunit with 10 battery packs, in which a voltage of the series subunit is 0.12 kV, and the series subunit can send power to special nearby users.
(4) 141 single battery pack subunits, in which a voltage of each of the single battery pack subunits is 0.12 kV, and each of the single battery packs independently used as a load power supply for nearby users.

In the buck station b, all battery packs in the second battery pack unit share the same specification, which can be any one of A-type battery packs, B-type battery packs, and C-type battery packs. The nominal voltage of each of the battery packs is 180 V; the optimal charging current of each of the battery packs is 198 A; and the optimal total charging voltage is 66.4 kV/1.2=55.33 kV. Therefore, the total number of the battery packs is 55.33 kV/0.12 kV=307, and their total nominal voltage is 307×0.18 kV=55.26 kV. After the charging on the buck side is completed, the connection mode of each of the battery packs in the second battery pack unit is changed according to the user loads and the type of the battery pack. the second battery pack unit a can be configured as follows.

(1) Two series subunits with 40 battery packs, in which a voltage of each of the two series subunits is 7.2 kV, and the two series subunits can send power to remote users.

(2) Four series subunits with 20 battery packs, in which a voltage of each of the four series subunits is 3.6 kV, and the four series subunits can send power to closer users.

(3) A series subunit with 10 battery packs, in which a voltage of the series subunit is 0.18 kV, and the series subunit can send power to closer users.

(4) 137 single battery pack subunits, in which a voltage of each of the single battery pack subunit is 0.18 kV, and each of the single battery packs independently used as a load power supply for nearby users.

In the buck station c, the second battery pack unit b is divided into two types of subunits, where the battery packs in each type of subunits can be any one of A-type battery packs, B-type battery packs, and C-type battery packs. In the first specification subunit, the nominal voltage of each of the battery packs is 120 V; the optimal charging current of each of the battery packs is 99 A; the total number of battery packs is 211, and their total nominal voltage is $211 \times 0.12$ kV=25.32 kV. In the second specification subunit, the nominal voltage of each of the battery packs is 300 V; the optimal charging current of each of the battery packs is 99 A; the total number of battery packs is 100, and their total nominal voltage is $100 \times 0.3$ kV=30 kV. The first specification subunit and the second specification subunit are connected in series, and thus the total nominal voltage of the second battery pack unit b is 25.32 kV+30 kV=55.32 kV. After the charging on the buck side is completed, the connection mode of each of the battery packs in the second battery pack unit is changed according to the user loads and the connection mode of the buck station a. the second battery pack unit can be configured as follows.

The first specification subunit can be configured as follows.

(1) A series subunit with 40 battery packs, in which a voltage of the series subunit is 4.8 kV, and the series subunit can send power to remote users.

(2) Three series subunits with 20 battery packs, in which a voltage of each of the three series subunit is 2.4 kV, and the series subunit can send power to closer users.

(3) A series subunit with 10 battery packs, in which a voltage of each of the series subunit is 0.12 kV, and the series subunit can send power to special nearby users.

(4) 101 single battery pack subunits, in which a voltage of each of the single battery pack subunits is 0.12 kV, and each of the single battery packs independently used as a load power supply for nearby users.

The second specification subunit includes 100 single battery pack subunits, in which the nominal voltage of each of the single battery pack subunits is 300V; and each of the battery pack subunits is used as a charging pile for electric vehicles.

In the buck station d, all battery packs in the second battery pack unit share the same specification, which can be any one of A-type battery packs, B-type battery packs, and C-type battery packs. The nominal voltage of each of the battery packs is 300 V; the optimal charging current of each of the battery packs is 109 A; and the optimal total charging voltage is 66.4 kV/1.2=55.33 kV. Therefore, the total number of battery packs is 55.33 kV/0.3 kV=184, and their total nominal voltage is $184 \times 0.3$ kV=55.2 kV. After the power supply is completed, the second battery pack unit are connected according to user loads, so that each of the battery packs is used as a charging pile for nearby electric vehicles.

In the buck station, the working current of the buck station a is 188 A; the working current of the buck station b is 198 A; the working current of the buck station c is 99 A; and the working current of the buck station d is 109 A; and thus, the total working current of the four buck stations connected in parallel is: 188 A+198 A+99 A+109 A=594 A.

The accompanying drawings and descriptions of the connection modes of the battery packs are as follows:

Fig. 1-2A, Fig. 1-2C, Fig. 1-5, Fig. 1-6, Fig. 1-7;
Fig. 2-1, Fig. 2-2;
Fig. 3-1-1, Fig. 3-1-2, Fig. 3-2-1, Fig. 3-2-2, Fig. 3-2-3;
Fig. 4-1-1, Fig. 4-1-2, Fig. 4-2-1, Fig. 4-2-2, Fig. 4-3-1, Fig. 4-3-2, Fig. 4-4-1, Fig. 4-4-2;
Fig. 5-1-1, Fig. 5-1-2, Fig. 5-2-1, Fig. 5-2-2, Fig. 5-3-1, Fig. 5-3-2, Fig. 5-4-1, Fig. 5-4-2.

**Arrangement 3**

In the arrangement, the DC power supply on the primary side includes a first DC power supply 110a, a second DC power supply 11b and a third DC power supply 110c, where the first DC power supply 110a is a photovoltaic power station, which has a power of 2.4 MW, an output voltage of 480 V, and an output current of 5000 A; the second DC power supply 110b is a photovoltaic power station, which has a power of 4.8 MW, an output voltage of 480 V, and an output current of 10000 A; and the third DC power supply 110 is a DC power supply rectified from a hydropower station or a DC power station, which has a power of 6 MW, an output voltage of 480 V, and an output current of 12500 A.

In the boost station, the battery packs in the first battery pack unit are A-type battery packs with the same specification, where the nominal voltage of each of the battery packs is 400 V, the optimal charging current of each of the battery packs is 250 A. The boost substation matched with the DC power supply a has 20 battery packs; the boost substation matched with the DC power supply b has 40 battery packs; and the boost substation matched with the DC power supply c has 50 battery packs. After the three boost substations are charged by their corresponding DC power sources on the primary side, the battery packs in each of the boost substations are changed to be connected in series, and the voltage of each of boost substation is 8 kV, 16 kV and 20 kV, respectively. And then each of the boost substation is connected in series at different places, and is connected to the power grid through the diode for power transmission, where the total voltage is 44 KV, and the transmission current is 250A.

There are three buck stations, including a first buck substation 140-1, a second buck substation 140-2 and a third buck substation 140-3, where their compositions are as follows.

In the first buck substation 140-1, the battery packs in the first battery pack unit are A-type battery packs with the same specification, where the nominal voltage of each of the battery packs is 120 V, the optimal charging current of each of the battery packs is 99 A, and the total optimal charging voltage is 44 kV/1.2=36.67 kV; the total number of battery packs is 36.67 kV/0.12 kV≈306, and the total nominal voltage is 306×120V=36.72 kV. After the charging on the buck side is completed, the connection mode of each of the battery packs in the first buck substation 140-1 is changed according to the user loads and the type of the battery pack. The first buck substation 142-1 can be configured as follows.

(1) A series subunit with 80 battery packs, in which a voltage of the series subunit is 9.6 kV, and the series subunit can send power to remote users.
(2) Two series subunits with 40 battery packs, in which a voltage of each of the two series subunits is 4.8 kV, and the two series subunits can send power to closer users.
(3) Two series subunits with 10 battery packs, in which a voltage of each of the two series subunit is 0.12 kV, and the two series subunits can send power to closer special users.
(4) 126 single battery pack subunits, in which a voltage of each of the single battery pack subunits is 0.12 kV, and each of the single battery packs independently used as a load power supply for nearby users.

In the second substation 140-2, all battery packs in the second battery pack unit share the same specification, which can be any one of A-type battery packs, B-type battery packs, and C-type battery packs. The nominal voltage of each of the battery packs is 120 V; the optimal charging current of each of the battery packs is 69 A; and the optimal total charging voltage is 44 kV/1.2=36.67 kV. The total number of the battery packs is 36.67 kV/0.12 kV≈306, and their total nominal voltage is 306×0.12 kV=36.72 kV. After the charging on the buck station is completed, the connection mode of each of the battery packs in the second battery pack unit is changed according to the user load and the type of the corresponding battery pack, and the composition is constructed as follows.

(1) A series subunit with 50 battery pack units, in which a voltage of the series subunit is 6.0kV, and the series subunit can send power to remote users.
(2) Two series subunits with 40 battery packs, in which a voltage of each of the two series subunit is 4.8 kV, and the two series subunit can send power to closer users.
(3) A series subunit with 10 battery packs, in which a voltage of the series subunit is 0.12 kV, and the series subunit can send power to closer special users.
(4) 166 single battery pack subunits, in which a voltage of each of the single battery pack subunits is 0.12kV, and each of the single battery packs independently used as a load power supply for nearby users.

In the third substation 140-3, all battery packs in the second battery pack unit share the same specification, which can be any one of A-type battery packs, B-type battery packs, and C-type battery packs. The nominal voltage of each of the battery packs is 300 V; the optimal charging current of each of the battery packs is 79 A; the optimal total charging voltage is 44 kV/1.2=36.67 kV; the total number of the battery packs is 36.67 kV/0.3 kV≈ 122; and their total nominal voltage is 122×300 V=36.6 kV. After the charging on the buck station is completed, the connection mode of each of the battery packs in the second battery pack unit is changed according to the user load and the type of the corresponding battery pack, and the composition is as follows.

122 single battery pack subunits, where a voltage of each of single battery pack subunits is 0.3kV, and each of the single battery pack subunits is used as a charging pile for nearby electric vehicles.

In the buck station, the working current of the first buck substation 140-1 is 99 A; the working current of the second buck substation 140-2 is 69 A; and the working current of the third buck substation 140-3 is 79 A. Therefore, the total working current of three buck substations connected in parallel is: 99 A+69 A+79 A =247 A.

The accompanying drawings and descriptions of the connection modes of the battery packs are as follows:

Fig. 1-2A, Fig. 1-2C, Fig. 1-3, Fig. 1-4, Fig. 1-5, Fig. 1-6, Fig. 1-7;
Fig. 2-1, Fig. 2-2;
Fig. 3-1-1, Fig. 3-1-2, Fig. 3-2-1, Fig. 3-2-2, Fig. 3-2-3;
Fig. 4-1-1, Fig. 4-1-2, Fig. 4-2-1, Fig. 4-2-2, Fig. 4-3-1, Fig. 4-3-2, Fig. 4-4-1, Fig. 4-4-2;

Fig. 5-1-1, Fig. 5-1-2, Fig. 5-2-1, Fig. 5-2-2, Fig. 5-3-1, Fig. 5-3-2, Fig. 5-4-1, Fig. 5-4-2.

**Arrangement 4**

In the arrangement, the full DC buck-boost power transmission system is the same as that in the above-mentioned arrangements, and the DC power supply on the primary side includes a first DC power supply 110-1A, a second DC power supply 110-1B, a third DC power supply 110-1C and a fourth DC power supply 110-1D, where the first DC power supply 110-1A is a photovoltaic power station, which has a power of 24 MW, an output voltage of 480 V, and an output current of 50000 A; the second DC power supply 110-1B is a photovoltaic power station, which has a power of 48 MW, an output voltage of 480 V, and an output current of 100000 A; the third DC power supply 110-1C is a DC power supply rectified from a hydropower station or a DC power station, which has a power of 23 MW, an output voltage of 6300 V, and an output current of 3650 A; and the fourth DC power supply 110-1D is a photovoltaic power station, which has a power of 80 MW, an output voltage of 480 V, and an output current of 166667 A.

There are two boost stations in the arrangement, including the first boost station 120-1 and the second boost station 120-2. The first boost station 121-1 has three boost substations at different places connected in series, including a first boost substation 121-1A, a second boost substation 121-1B, and a third boost substation 121-1C. The battery packs in the first boost substation and the second boost substation are A-type battery packs with the same specification, where the nominal voltage of each of the battery packs is 400 V, the optimal charging current of each of the battery packs is 400 A. The first boost substation 121-1A matched with the first DC power supply 110-1A has 124 battery packs; and the second boost substation 121-1B matched with the second DC power supply 110-1B has 250 battery packs. The battery packs in the third boost substation 121-1C are A-type battery packs with the same specification, where the nominal voltage of each of the battery packs =6300/1.2=5250 V; the optimal charging current of each of the battery packs is 400 A; and the number of the battery packs is 9. After the three boost substations are respectively charged by their corresponding DC power supplies on the primary side, the battery packs in the boost station are changed to be connected in series, where the voltage of the boost substations respectively are 124×400 V=49.6 kV, 250×400 V=100 kV and 9 ×5250 V=47.25 kV. Each of the boost substations is connected in series at different places, and is connected to the power grid through the diode for power transmission, the total voltage is 196.85 kV, and the current is 400 A. The battery packs in the second boost station 121-2 are A-type battery pack with the same specification, where the nominal voltage of each of the battery packs is 400 V, and the optimal charging current of each of the battery packs is 339 A. The second boost substation 121-1A matched with the fourth DC power supply 110-2 has 492 battery packs. After the first battery pack unit in the second boost substation 120-2 is charged by the corresponding DC power supply on the primary side, the battery packs are changed to be connected in series, and connected to the power grid through the diode for power transmission, where the voltage is 492×400 V=196.8 kV, and the current is 339 A.

There are four buck stations, including a first buck substation 140-1, a second buck substation 140-2, a third buck substation 140-3, where their compositions are as follows.

In the first buck substation 140-1, all battery packs in the second battery pack unit share the same specification, which can be any one of A-type battery packs, B-type battery packs, and C-type battery packs. The nominal voltage of each of the battery packs is 400 V; the optimal charging current of each of the battery packs is 248 A; and the optimal total charging voltage is 196.8 kV/1.2=164 kV; therefore, the total number of battery packs is 196.8 kV/0.4 kV≈164, and their total nominal voltage is 417×400 V=164 kV. After the charging on the buck side is completed, the connection mode of each of the battery packs in the second battery pack unit is changed according to the user loads and the type of the battery pack. the second battery pack unit can be configured as follows.

(1) A series subunit with 100 battery packs, in which a voltage of the series subunit is 40 kV, and the series subunit can send power to remote users.
(2) A series subunit with 75 battery packs, in which a voltage of the series subunit is 30 kV, and the series subunit can send power to farther users.
(3) A series subunit with 50 battery packs, in which a voltage of the subunit is 20 kV, and the series subunit can send power to farther users.
(4) Three series subunits with 36 battery packs, in which a voltage of each of the subunit is 14.4 kV, and the three series subunits can send power to farther users.
(5) 77 single battery pack subunits, in which a voltage of each of the single battery pack subunits is 0.4 kV, and each of the single battery pack subunits independently supply power to nearby low-voltage DC microgrids.

In the second buck substation 140-2, all battery packs in the second battery pack unit share the same specification, which can be any one of A-type battery packs, B-type battery packs, and C-type battery packs. The nominal voltage of each of the battery packs is 400 V; the optimal charging current of each of the battery packs is 200 A; and the optimal total charging voltage is 196.8 kV/1.2=164 kV; therefore, the total number of battery packs is 164 kV/0.4 kV≈410, and their total nominal voltage is 410×400 V=164 kV. After the charging on the buck side is completed, the connection mode of each of the battery packs in the second battery pack unit is changed according to the user loads and the type of the battery pack. the second battery pack unit can be configured as follows.

(1) A series subunit with 125 battery packs, in which a voltage of the series subunit is 50 kV, and the series subunit can send power to remote users.

(2) A series subunit with 80 battery packs, in which a voltage of the series subunit is 32 kV, and the series subunit can send power to farther users.

(3) A series subunit with 50 battery packs, in which a voltage of the subunit is 24 kV, and the series subunit can send power to farther users.

(4) Three series subunits with 50 battery packs, in which a voltage of each of the subunit is 24 kV, and the three series subunits can send power to farther users.

(5) 95 single battery pack subunits, in which a voltage of each of the single battery pack subunits is 0.4 kV, and each of the single battery pack subunits independently supply power to nearby users.

In the third buck substation 140-3, all battery packs in the second battery pack unit share the same specification, which can be any one of A-type battery packs, B-type battery packs, and C-type battery packs. The nominal voltage of each of the battery packs is 500 V; the optimal charging current of each of the battery packs is 150 A; and the optimal total charging voltage is 196.8 kV/1.2=164 kV; therefore, the total number of battery packs is 164 kV/0.5 kV≈328, and their total nominal voltage is 328×500 V=164 kV. After the charging on the buck side is completed, the connection mode of each of the battery packs in the second battery pack unit is changed according to the user loads and the type of the battery pack. the second battery pack unit can be configured as follows.

(1) A series subunit with 60 battery packs, in which a voltage of the series subunit is 30 kV, and the series subunit can send power to remote users.

(2) Two series subunits with 50 battery packs, in which a voltage of the series subunit is 25 kV, and the series subunit can send power to farther users.

(3) Three series subunits with 30 battery packs, in which a voltage of the subunit is 15 kV, and the series subunit can send power to farther users.

(4) 78 single battery pack subunits, in which a voltage of each of the single battery pack subunits is 0.5 kV, and each of the single battery pack subunits independently supply power to nearby users.

In the fourth buck substation 140-4, all battery packs in the second battery pack unit share the same specification, which can be any one of A-type battery packs, B-type battery packs, and C-type battery packs.

The nominal voltage of each of the battery packs is 300 V; the optimal charging current of each of the battery packs is 130 A; and the optimal total charging voltage is 196.8 kV/1.2=164 kV; therefore, the total number of battery packs is 164 kV/0.3 kV≈547, and their total nominal voltage is 547×300 V=164.1 kV. After the charging on the buck side is completed, the connection mode of each of the battery packs in the second battery pack unit is changed according to the user loads and the type of the battery pack. the second battery pack unit can be configured as follows.

(1) A series subunit with 115 battery packs, in which a voltage of the series subunit is 34.5 kV, and the series subunit can send power to remote users.

(2) A series subunit with 100 battery packs, in which a voltage of the series subunit is 30 kV, and the series subunit can send power to remote users.

(3) Two series subunits with 70 battery packs, in which a voltage of the series subunit is 21 kV, and the series subunit can send power to farther users.

(4) Three series subunits with 30 battery packs, in which a voltage of the subunit is 9 kV, and the series subunit can send power to farther users.

(5) 102 single battery pack subunits, in which a voltage of each of the single battery pack subunits is 0.3 kV, and each of the single battery pack subunits is configured as a charging pile for electric vehicles nearby.

The accompanying drawings and descriptions of the connection modes of the battery packs are as follows:

Fig. 1-2A, Fig. 1-2C, Fig. 1-3, Fig. 1-4, Fig. 1-5, Fig. 1-6, Fig. 1-7;

Fig. 2-1, Fig. 2-2;

Fig. 3-2-1, Fig. 3-2-2, Fig. 3-2-3;

Fig. 4-2-1, Fig. 4-2-2, Fig. 4-3-1, Fig. 4-3-2, Fig. 4-4-1, Fig. 4-4-2;

Fig. 5-2-1, Fig. 5-2-2, Fig. 5-3-1, Fig. 5-3-2, Fig. 5-4-1, Fig. 5-4-2;

Fig. 7-1, Fig. 7-2.

**Arrangement 5**

In the arrangement, the full DC buck-boost power transmission system is the same as that in the above-mentioned arrangements, and the DC power supply on the primary side is a photovoltaic power station, which has a power of 14.4 MW, an output voltage of 480 V, and an output current of 30000 A.

There are two boost stations in the arrangement, including a high voltage boost station 120A and a high current boost station 120B. The high voltage boost substation 120A adopts the A-type battery packs, where the nominal voltage of each of the battery packs is 400 V; the optimal charging current of each of the battery packs is 200A; and the number of the battery packs is 150. The high current boost substation 120B adopts the A-type battery packs, where the nominal voltage of each of the battery packs is 400 V; the optimal charging current of each of the battery packs is 600 A; and the number of the battery packs is 50. If the sum of the optimal charging current after the two boost stations are connected in parallel is equal to 30000 A, the power supplies on the primary side can respectively charge the battery packs at full capacity. After the charging is completed, when the DC power supply on the primary side is matched with the high voltage boost station 120A, all battery packs are changed to form three first series stacks, where each of the first series stacks includes 50 battery packs; each of the first series stack is connected to the power grid through the diode for power transmission, where the voltage is 50×400 V=20 kV, and the current is 200 A. when the DC power supply on the primary side is matched with the high current boost station 120B, all 50 battery packs are connected in series after being charged, and connected to the power grid through the diode for power transmission, where the voltage is 50×400 V=20 kV, and the current is 600 A.

In the buck station, all battery packs in the second battery pack unit share the same specification, which can be any one of A-type battery packs, B-type battery packs, and C-type battery packs. The nominal voltage of each of the battery packs is 120 V; the optimal charging current each of the battery packs is 198 A, which is slightly less than the current delivered by the high voltage boost station, and slightly less than one-third of the current delivered by the high current boost station. The optimal total charging voltage is 20 kV/1.2=16.67 kV; the total number of battery packs is 16.67 kV/0.12 kV≈139, and their total nominal voltage is 139×0.12 kV=16.68 kV. After the charging on the buck side is completed, the connection mode of each of the A-type battery packs is changed according to the user loads and the type of the battery pack. The second battery pack unit can be configured as follows.

(1) A series subunit with 20 battery packs, in which a voltage of the series subunit is 6 kV, and the series subunit can send power to closer users.
(2) Three series subunits with 10 battery packs, in which a voltage of each of the three series subunit is 1.2 kV, and the three series subunits can send power to closer users.
(3) 89 single battery pack subunits, in which a voltage of each of the single battery pack subunits is 0.12 kV, and each of the single battery packs independently used as a load power supply for nearby users.

The above-mentioned full DC buck-boost power transmission system is applied to an isolated photovoltaic power station to continuously supply power to electrical loads. The two boost stations 120A and 120B are equivalent for the same buck station.

The accompanying drawings and descriptions of the connection modes of the battery packs are as follows:

Fig. 1-2A, Fig. 1-2B, Fig. 1-2C, Fig. 1-5, Fig. 1-6, Fig. 1-7;
Fig. 2-1, Fig. 2-2;
Fig. 3-2-1, Fig. 3-2-2, Fig. 3-2-3;
Fig. 4-2-1, Fig. 4-2-2, Fig. 4-3-1, Fig. 4-3-2, Fig. 4-4-1, Fig. 4-4-2;
Fig. 5-2-1, Fig. 5-2-2, Fig. 5-3-1, Fig. 5-3-2, Fig. 5-4-1, Fig. 5-4-2;

## Arrangement 6

In the arrangement, the DC power supply on the primary side is a photovoltaic power station or a wind turbine generator.

When the DC power supply is a photovoltaic power station, the DC power supply has a power of 2.4 MW, an output voltage of 960 V, and an output current of 2500 A.

In the buck station, the battery packs in the second battery pack unit can be any one of A-type battery packs, B-type battery packs, and C-type battery packs. The nominal voltage of each of the battery packs is 120 V. The battery packs in the second battery pack unit are constructed according to the optimal charging current as follows.

There are 277 series subunits consisting of 7 battery packs with the optimal charging current of 9A, where the total nominal voltage of each of the series subunit is 840 V. All the 277 series subunits are connected in parallel for charging.

After the charging on the buck side is completed, the buck station is disconnected from the photovoltaic power station, and the 277 series subunits are separated from each other. Therefore, the battery packs in each of the series subunits are separated from each other, and are connected in parallel, so that each of the series subunits is divided into 7 single battery pack subunits, and each of the single battery pack subunits independently supplies power to a user, where the total number of the users is 7×277=1939; the total current is 277×9 A=2493 A; and the distance of the users from the buck station is less than 1 km.

When the DC power supply is a wind turbine generator with a DC output without inverter, the DC power supply has a power of 1 MW, an output voltage of 480 V, and an output current of 2083 A.

In the buck station, the battery packs in the second battery pack unit can be any one of A-type battery packs, B-type battery packs, and C-type battery packs.

The nominal voltage of each of the battery packs is 100 V. The battery packs in the second battery pack unit are constructed according to the optimal charging current as follows.

(1) 100 series subunits consisting of 4 battery packs with the optimal charging current of 8 A.
(2) 88 series subunits consisting of 4 battery packs with the optimal charging current of 10 A.
(3) 32 series subunits consisting of 4 battery packs with the optimal charging current of 12 A.

The nominal voltage of each of the series subunits is 400 V, and all the series subunits are connected in parallel for charging.

After the charging on the buck side is completed, each of the series subunits is disconnected from the wind turbine generator; the battery packs in each of the series subunits are also disconnected from each other, so that each of battery packs independently supplies power to a user, where the distance of the users from the buck station is less than 0.3 km; a total number of users is $4 \times (100 + 88 + 32) = 880$; and the total current is $100 \times 8 A + 88 \times 10 A + 32 \times 12A = 2064A$.

The accompanying drawings and descriptions of the connection modes of the battery packs are as follows:

Fig. 1-2A, Fig. 1-2C, Fig. 1-6, Fig. 1-7;
Fig. 3-2-1, Fig. 3-2-2, Fig. 3-2-3;
Fig. 4-2-1, Fig. 4-2-2, Fig. 4-3-1, Fig. 4-3-2, Fig. 4-4-1, Fig. 4-4-2;
Fig. 5-2-1, Fig. 5-2-2, Fig. 5-3-1, Fig. 5-3-2, Fig. 5-4-1, Fig. 5-4-2.

**Arrangement** 7

In the arrangement, illustrated is an open full DC buck-boost transmission and transformation power grid, where the composition and the operation state of the power grid will be described as follows.

As shown in Fig. 7-1, GYDW is a high-voltage power grid, where there are three boost stations and two buck stations connected to the high-voltage power grid.

CDCLD1 is composed of A-type ordinary type battery packs, where the fully charged battery packs in the drawing are filled with gray to distinguish; the CDCLD1 is connected to the high-voltage power grid through the diode to supply power. ZLJK1 is a DC interface 1 provided for the first series stack 122-1.

CDCLD2 is composed of the A-type battery pack, where the fully charged battery packs in the drawing are filled with gray to distinguish; the CDCLD2 is connected to the high-voltage power grid through the diode to supply power; the second series stack 2 in the first battery pack unit is composed of a plurality of series sub-stacks, including CDCLD2a, CDCLD2b, and CDCLD2c, where the series sub-stacks may not be arranged in the same place, and there is a certain distance from each other. ZLJK2a is a DC interface 2a provided for the CDCLD2a; ZLJK2b is a DC interface 2b provided for the CDCLD2b; and ZLJK2c is a DC interface 2c, provided for the CDCLD2c.

CDCLD3 is composed of A-type battery packs, where the fully charged battery packs in the drawing are filled with gray to distinguish; the CDCLD2 is connected to the high-voltage power grid through the diode to supply power. ZLJK3 is a DC interface 3, provided for the third series stack 3 in the first battery pack unit.

The diode is provided for preventing current flowing into the charging series stacks.

BCDXDCZ1 is a first series stack 1 to be charged, consisting of B-type or C-type battery packs. The battery packs without fill color in the drawing are being charged. After the BCDXDCZ1 is fully charged, the connection mode of the battery packs can be changed to form a single battery pack subunit, a parallel subunit and a series subunit. FZJK1a, FZJK1b and FZJK1c are respectively a load interface provided for the parallel combination of the battery packs to be charged or the series stack of the battery packs to be charged.

BCDXDCZ2 is a second series stack 2 to be charged, consisting of B-type or C-type battery packs. The battery packs without fill color in the drawing are being charged. FZJK1a, FZJK1b and FZJK1c are respectively a load interface provided for the parallel combination of the battery packs to be charged or the series stack of the battery packs to be charged.

YLJK: a reserved interface, configured to connect the other subunit of the second battery group unit that meets the technical indicators in the future to the power grid. Therefore, an open power grid is provided for connecting to other power grids in remote regions.

FIG 7-2 schematically show the circuit of the full DC high voltage transmission and distribution power grid in another working state according to the arrangement of the present disclosure.

The third series stack 3 is disconnected from the high-voltage power grid and connected to the ZLJK3 for charging on the boost side.

After the charging on the buck side is completed and the second series stack to be charged 2 is disconnected from the power grid, the second series stack to be charged 2 forms a parallel subunit and a series subunit, so that the subunits are connected to their corresponding loads to supply power; FZJK2a: a load interface 2a, connected to the series subunit; FZJK2b: a load interface 2b, connected to the parallel subunit; and FZJK2c: a load interface 2c, connected to the single battery pack subunit.

Each of the charging series stacks in the first battery pack unit and each of the series stacks to be charged the second battery pack unit have two working states of being charged and charging, but the periods of their working state are different. Therefore, there are many combinations of working conditions of the entire power grid, and the combinations of working conditions are constantly changing. There are about dozens of connection modes, where only two connection modes are listed out in the above-mentioned arrangements. In actual use, the switching of the working conditions of each of the boost stations and each of the buck station should be controlled by a power grid management center. The smart grid technologies including hardware and software for overall management, control, adjustment, and detection are not elaborated herein.

## Industrial applicability

The industrial applicability of various types of power transmission systems of the present disclosure are introduced when explaining the full DC buck-boost power transmission system in the above-mentioned arrangements.

In order to implement the full DC buck-boost power transmission system of the present disclosure, the power grid is provided with the following characteristics: a battery pack in the first battery pack unit for boosting is disconnected from the power grid when charging on the boost side, and they are connected to the power grid only when they charge the battery packs in the second battery pack unit on the buck side. The battery packs in the second battery pack unit for bucking is connected to the power grid only when they need to be charged, and they are disconnected from the power grid when supplying power to the loads. Therefore, if the power grid fails, the power station can continue to work, where the battery packs in the first battery pack unit can continue to be charged, and the battery packs in the second battery pack unit can continue to supply power to the loads. Therefore, the DC power supply system has the advantages of safe, easy to handle power grid accidents, and simple and reliable control and management system.

The present disclosure tightly combines power generation, energy storage and power supply, and has strong resistance to fluctuations in the power generation terminal and the user terminal.

The present disclosure can obtain high-quality DC power and eliminate various types of AC harmonics.

Instead of the DC to AC and AC to DC conversions, the present disclosure relies on the conversion between electrical energy and chemical energy. The full DC buck-boost power transmission system is more energy-saving if high quality and high energy storage density are adopted. At present, AC power generation occupies a great advantage in the global power supply. However, it is feasible and advantageous to adopt the full DC buck-boost power transmission system of the present disclosure to establish the microgrid and local power grid by using various renewable energy power stations. As a result, the development of the technologies such as detection, control, management, maintenance and overhaul will be promoted, which in turn provides mature technologies and experience for the establishment of cross-regional and even global DC power grid.

## Claims

1. A full DC boost-buck power transmission system, comprising:

    at least one boost station;
    at least one buck station;
    a power grid management center;
    a DC power supply; and
    a cable (130) provided for connecting the at least one boost station to the at least one buck station;
    **characterized in that** the at least one boost station comprises a plurality of first battery packs, and the first battery packs are connected in parallel for storage of DC power from the DC power supply;
    when the storage of the first battery packs is completed, the first battery packs are disconnected from the DC power supply and are connected in series to perform the boost operation, and then connected to the cable (130) to supply the DC power to the at least one buck station; and after transmission of the DC power is completed, the first battery packs are disconnected from the cable (130) and connected in parallel, and then connected to the DC power supply for the storage of the DC power;
    the at least one buck station comprises a plurality of second battery packs, and the second battery packs are connected in series for transmission of DC power from the boost station to the buck station;
    when the transmission of the DC power is completed, the second battery packs of the at least one buck station are configured to form a plurality of single battery pack subunits, a plurality of series subunits and a plurality of parallel subunits, so that the different kinds of the subunits are independently connected to their corresponding loads for transmission of the DC power from the subunits to their corresponding loads;
    after the supply of DC power from the subunits to their corresponding loads is completed, the second battery packs in the at least one buck station are disconnected from the loads and connected in series, and then connected to the cable (130) for transmission of DC power from the boost station; and
    the power grid management center is configured to switch connection modes of the battery packs (XDCZ00) in the at least one boost station and the at least one buck station between series connection and parallel connection and to switch connection and disconnection of at least one booster station with the cable (130) as well as to switch connection and disconnection of at least one buck station with the cable (130), to achieve storage, boost, transmission, buck and supply of DC power.

2. The full DC boost-buck power transmission system according to claim 1, wherein after the transmission of the DC power is completed, the series subunits in the at least one buck station are configured as a DC power supply to supply power to a power grid with a voltage lower than a voltage of the series subunits in the at least one buck station.

3. The full DC boost-buck power transmission system according to claim 1, wherein the at least one boost station comprises a plurality of boost substations connected in series; the plurality of boost substations are respectively installed at different locations; the DC power supply consists of a plurality of DC power supplies which are different from each other in type and are configured to charge the first battery packs of each of the boost substations.

4. The full DC boost-buck power transmission system according to claim 1, wherein the boost station is adjacent to the DC power supply and is able to output voltage; the buck station is established at a center of a user group and is able to provide an access voltage; and a plurality of backup power supply inlets and a plurality of power supply outlets are further provided to access boost stations and buck stations.

**Patentansprüche**

1. Vollständiges DC-Boost-Buck-Stromübertragungssystem, umfassend:

mindestens eine Boost-Station;
mindestens eine Buck-Station;
ein Stromnetz-Managementzentrum;
eine Gleichstromversorgung; und
ein Kabel (130), das zur Verbindung der mindestens einen Boost-Station mit der mindestens einen Buck-Station vorgesehen ist;
**dadurch gekennzeichnet, dass** die mindestens eine Boost-Station eine Vielzahl von ersten Batteriepaketen umfasst und die ersten Batteriepakete zur Speicherung von Gleichstrom aus der Gleichstromversorgung parallel geschaltet sind;
wobei, wenn die Speicherung der ersten Batteriepakete abgeschlossen ist, die ersten Batteriepakete von der Gleichstromversorgung getrennt und seriell geschaltet werden, um den Boost-Vorgang durchzuführen, und dann mit dem Kabel (130) verbunden sind, um die Gleichstrom an die mindestens eine Buck-Station zu liefern; und wobei, nachdem die Übertragung der Gleichstrom abgeschlossen ist, die ersten Batteriepakete von dem Kabel (130) getrennt und parallelgeschaltet werden und dann mit der Gleichstromversorgung zur Speicherung der Gleichstrom verbunden sind;
wobei die mindestens eine Buck-Station eine Vielzahl von zweiten Batteriepaketen umfasst und die zweiten Batteriepakete zur Übertragung von Gleichstrom von der Boost-Station zur Buck-Station seriell geschaltet sind;
wobei, wenn die Übertragung des Gleichstroms abgeschlossen ist, die zweiten Batteriepakete der mindestens einen Buck-Station so konfiguriert sind, dass sie eine Vielzahl von Einzelbatteriepaket-Untereinheiten, eine Vielzahl von Reihenuntereinheiten und eine Vielzahl von Parallelunterheinheiten bilden, so dass die verschiedenen Arten von Untereinheiten unabhängig voneinander an ihre entsprechenden Lasten angeschlossen werden, um den Gleichstrom von den Untereinheiten an ihre entsprechenden Lasten zu übertragen; wobei, nachdem die Zufuhr von Gleichstrom von den Untereinheiten zu ihren entsprechenden Lasten abgeschlossen ist, die zweiten Batteriepakete in der mindestens einen Boost-Station von den Lasten getrennt und seriell geschaltet werden und dann mit dem Kabel (130) zur Übertragung von Gleichstrom von der Boost-Station verbunden sind; und
wobei das Stromnetz-Managementzentrum so konfiguriert ist, dass es die Verbindungsmodi der Batteriepakete (XDCZ00) in der mindestens einen Boost-Station und der mindestens einen Buck-Station zwischen Reihenschaltung und Parallelschaltung umschaltet und die Verbindung und Trennung der mindestens einen Boost-Station mit dem Kabel (130) sowie die Verbindung und Trennung der mindestens einen Buck-Station mit dem Kabel (130) umschaltet, um die Speicherung, den Boost, die Übertragung, den Buck und die Versorgung mit Gleichstrom zu erreichen.

2. Vollständiges DC-Boost-Buck-Stromübertragungssystem nach Anspruch 1, wobei, nachdem die Übertragung der Gleichstrom abgeschlossen ist, die Reihenuntereinheiten in der mindestens einen Buck-Station als Gleichstromversorgung konfiguriert sind, um ein Stromnetz mit einer Spannung zu versorgen, die niedriger als die Spannung der Reihenuntereinheiten in der mindestens einen Buck-Station ist.

3. Vollständiges DC-Boost-Buck-Stromübertragungssystem nach Anspruch 1, wobei die mindestens eine Boost-Station mehrere seriell geschaltete Boost-Unterstationen umfasst; die mehreren Boost-Unterstationen jeweils an verschiedenen Orten installiert sind; wobei die Gleichstromversorgung aus mehreren Gleichstromversorgungen besteht, die sich im Typ voneinander unterscheiden und zum Laden der ersten Batteriepakete jeder der Boost-Unterstationen konfiguriert sind.

4. Vollständiges DC-Boost-Buck-Stromübertragungssystem nach Anspruch 1, wobei die Boost-Station angrenzend an die Gleichstromversorgung angeordnet ist und in der Lage ist, Spannung auszugeben; die Buck-Station zentral einer Benutzergruppe eingerichtet ist und in der Lage ist, eine Zugangsspannung bereitzustellen; und eine Vielzahl von Reservestromversorgungseingängen und eine Vielzahl von Stromversorgungsausgängen weiterhin für den Zugang zu Boost-Stationen und Buck-Stationen vorgesehen sind.

## Revendications

1. Système de transmission d'énergie CC complet avec survolteur-abaisseur, comprenant :

   au moins une station d'amplification ;
   au moins une station d'abaissement ;
   un centre de gestion du réseau électrique ;
   une alimentation CC ; et
   un câble (130) prévu pour connecter la ou les stations d'amplification à la ou les stations d'abaissement ;
   **caractérisé en ce que** la ou les stations d'amplification comprennent une pluralité de premiers blocs-batteries, et les premiers blocs-batteries sont connectés en parallèle pour le stockage de l'énergie CC provenant de l'alimentation CC ;
   lorsque le stockage des premiers blocs-batteries est terminé, les premiers blocs-batteries sont déconnectés de l'alimentation CC et connectés en série pour l'opération d'amplification, et puis connectés au câble (130) pour fournir l'énergie CC à au moins une station d'abaissement ; une fois la transmission de l'énergie CC terminée, les premiers blocs-batteries sont déconnectés du câble (130) et connectés en parallèle, puis connectés à l'alimentation CC pour le stockage de l'énergie CC ;
   la ou les stations d'abaissement comprennent une pluralité de deuxièmes blocs-batteries, et les deuxièmes blocs-batteries sont connectés en série pour la transmission de l'énergie CC de la station d'amplification à la station d'abaissement ;
   lorsque la transmission de l'énergie CC est terminée, les deuxièmes blocs-batteries de la ou des stations d'abaissement sont configurés pour former une pluralité de sous-unités de blocs-batteries simples, une pluralité de sous-unités en série et une pluralité de sous-unités en parallèle, de sorte que les différents types de sous-unités sont indépendamment connectés à leurs charges correspondantes pour la transmission de l'énergie CC des sous-unités à leurs charges correspondantes ; une fois la fourniture d'énergie CC des sous-unités à leurs charges correspondantes terminée, les deuxièmes blocs-batteries de la ou des stations d'abaissement sont déconnectés des charges et connectés en série, puis connectés au câble (130) pour la transmission de l'énergie CC depuis la station d'amplification ; et
le centre de gestion du réseau électrique est configuré pour commuter les modes de connexion des blocs-batteries (XDCZ00) dans au moins une station d'amplification et au moins une station d'abaissement entre une connexion en série et une connexion en parallèle, et pour commuter la connexion et la déconnexion d'au moins une station d'amplification avec le câble (130) ainsi que pour commuter la connexion et la déconnexion d'au moins une station d'abaissement avec le câble (130), afin de réaliser le stockage, l'amplification, la transmission, l'abaissement et la fourniture d'énergie CC.

2. Système de transmission d'énergie CC complet avec survolteur-abaisseur selon la revendication 1, dans lequel, une fois la transmission de l'énergie CC terminée, les sous-unités en série de la ou des stations d'abaissement sont configurées comme une alimentation CC pour alimenter un réseau électrique avec une tension inférieure à celle des sous-unités en série dans au moins une station d'abaissement.

3. Système de transmission d'énergie CC complet avec survolteur-abaisseur selon la revendication 1, dans lequel la ou les stations d'amplification comprennent une pluralité de sous-stations d'amplification connectées en série ; la pluralité de sous-stations d'amplification sont respectivement installées à différents endroits ; l'alimentation CC se compose d'une pluralité d'alimentations CC qui sont de type différent les unes des autres, et configurées pour charger les premiers blocs-batteries de chacune des sous-stations d'amplification.

4. Système de transmission d'énergie CC complet avec survolteur-abaisseur selon la revendication 1, dans lequel la station d'amplification est adjacente à l'alimentation CC et est capable de produire une tension de sortie ; la station d'abaissement est établie au centre d'un groupe d'utilisateurs et est capable de fournir une tension d'accès ; et une pluralité d'entrées d'alimentation de secours et une pluralité de sorties d'alimentation sont en outre prévues pour accéder aux stations d'amplification et aux stations d'abaissement.

FIG. 1-1

FIG. 1-2A

FIG.1-2B

FIG. 1-2C

FIG. 1-3

FIG. 1-4

FIG. 1-5

FIG. 1-6

FIG. 1-7

FIG. 2-1

FIG. 2-2

FIG. 3-1-1

FIG. 3-1-2

FIG. 3-1-3

FIG. 3-2-1

FIG. 3-2-2

FIG. 3-2-3

FIG. 4-1-1

FIG. 4-1-2

FIG. 4-2-1

FIG. 4-2-2

FIG. 4-3-1

FIG. 4-3-2

FIG. 4-4-1

FIG. 4-4-2

FIG. 5-1-1

FIG. 5-1-2

FIG. 5-2-1

FIG. 5-2-2

FIG. 5-3-1

FIG. 5-3-2

FIG. 5-4-1

FIG. 5-4-2

FIG. 6-1

FIG. 6-2

FIG. 7-1

FIG. 7-2

**REFERENCES CITED IN THE DESCRIPTION**

**Patent documents cited in the description**

- EP 0013005 A1